# EUROPEAN PATENT APPLICATION

(11) **EP 4 432 223 A1**
(43) Date of publication of application: **18.09.2024**
(21) Application number: 24161158.1
(22) Date of filing: 04.03.2024
(51) Int. Cl.: G06T 7/00

(54) **METHODS FOR DETERMINING IMAGE FILTERS FOR CLASSIFYING PARTICLES OF A SAMPLE AND SYSTEMS AND METHODS FOR USING SAME**

(30) Priority: 14.03.2023 US 202363452095 P
(71) Applicant: Becton, Dickinson and Company, Franklin Lakes, NJ 07417-1880 (US)
(72) Inventor: ALMARODE, James, Frankin Lakes, 07417-1880 (US); SPIDLEN, Josef, Frankin Lakes, 07417-1880 (US)
(74) Representative: Arnold & Siedsma

(57) **Abstract**

Aspects of the present disclosure include methods for determining image filters for classifying particles of a sample (e.g., cells of a biological sample) in a particle analyzer. Methods according to certain embodiments include inputting into a machine learning algorithm one or more training data sets having a plurality of images of particles and quantified parameters of image filters, generating a dynamic particle classification algorithm based on the training data sets and the quantified parameters of the image filters and calculating an adjustment to one or more of the quantified parameters of the image filters. Systems and non-transitory computer readable storage medium for practicing the subject methods are also described.

## Description

### CROSS-REFERENCE TO RELATED APPLICATIONS

This application claims priority to the filing date of United States Provisional Patent Application Serial No. 63/452,095 filed on March 14, 2023.

### INTRODUCTION

Light detection is often used to characterize components of a sample (e.g., biological samples), for example when the sample is used in the diagnosis of a disease or medical condition. When a sample is irradiated, light can be scattered by the sample, transmitted through the sample as well as emitted by the sample (e.g., by fluorescence). Variations in the sample components, such as morphologies, absorptivity and the presence of fluorescent labels may cause variations in the light that is scattered, transmitted or emitted by the sample. These variations can be used for characterizing and identifying the presence of components in the sample. To quantify these variations, the light is collected and directed to the surface of a detector.

One technique that utilizes light detection to characterize the components in a sample is flow cytometry. A flow cytometer includes a photo-detection system made up of the optics, photodetectors and electronics that enable efficient detection of optical signals and its conversion to corresponding electric signals. The electronic signals are processed to obtain parameters that a user can utilize to perform desired analysis. Cytometers further include means for recording and analyzing the measured data. For example, data storage and analysis may be carried out using a computer connected to the detection electronics. The data can be stored in tabular form, where each row corresponds to data for one particle, and the columns correspond to each of the measured parameters. The use of standard file formats, such as an "FCS" file format, for storing data from a particle analyzer facilitates analyzing data using separate programs and/or machines. Using current analysis methods, the data typically are displayed in 1-dimensional histograms or 2-dimensional (2D) plots for ease of visualization.

The data obtained from an analysis of particles (e.g., cells) by flow cytometry are often multidimensional, where each particle corresponds to a point in a multidimensional space defined by the parameters measured. Populations of particles or cells can be identified as clusters of points in the data space. For example, identifying populations of interest can be carried out by drawing a gate around a population displayed in one or more 2-dimensional plots, referred to as "scatter plots" or "dot plots," of the data.

### SUMMARY

Aspects of the present disclosure include methods for determining image filters for classifying particles of a sample (e.g., cells of a biological sample) in a particle analyzer. Methods according to certain embodiments include inputting into a machine learning algorithm one or more training data sets having a plurality of images of particles and quantified parameters of image filters, generating a dynamic particle classification algorithm based on the training data sets and the quantified parameters of the image filters and calculating an adjustment to one or more of the quantified parameters of the image filters. Systems and non-transitory computer readable storage medium for practicing the subject methods are also described.

In embodiments, training sets having one or more images of particles are inputted into a machine learning algorithm. In some instances, each training data set includes one or more unfiltered images of particles. In some instances, each training data set includes one or more ground-truth images of particles. In some embodiments, the machine learning algorithm is a neural network. In some instances, the machine learning algorithm is a neural network such as an artificial neural network, a convolutional neural network or a recurrent neural network.

In practicing the subject methods, one or more parameters of the image filters inputted into the machine learning algorithm are quantified. In some embodiments, the parameters of the image filters are quantified for one or more photodetector channels of the light detection system. In some instances, the parameters of the image filters are quantified for one or more fluorescence photodetector channels. In some instances, the parameters of the image filters are quantified for at least a plurality of the photodetector channels. In certain instances, the parameters of the image filters are quantified for all of the photodetector channels of the light detection system. For example, the parameters of the image filters may be quantified for the scattered light photodetector channels (e.g., forward-scattered light, side-scattered light), the light absorption photodetector channels and the fluorescence photodetector channels.

In some embodiments, a photodetector channel is quantified as being enabled or not enabled for an image filter. In some instances, for each photodetector channel an enabled image filter is quantified as a 1 and a notenabled image filter is quantified as a 0. In certain embodiments, each photodetector channel is first identified or designated as being enabled or not enabled before quantifying each subsequent parameter of the image filters.

In some embodiments, the plurality of image filters includes one or more image filter parameters selected from smooth, sharpen, blur, threshold, gamma correction, edges, invert and intensity. In some instances, the parameter of the image filter is binary, such as being quantified as a 1 (i.e., image filter parameter is being applied) or a 0 (i.e., image filter parameter is not being applied). In some instances, the parameter of the image filter is quantified to be within a predetermined range, such as from 0 to 2, such as from 0 to 5, such as from 0 to 8, such as from 0 to 10, such as from 0 to 20, such as from 0 to 25, such as from 0 to 50, such as from 0 to 100. In some instances, the image filter smooth parameter is quantified as a 1 or as a 0. In some instances, the image filter sharpen parameter is quantified as a 1 or as a 0. In some instances, the image filter edges parameter is quantified as a 1 or as a 0. In some instances, the image filter gamma correction parameter is quantified from 0 to 2. In some instances, the image filter blur parameter is quantified from 0 to 8. In some instances, the image filter threshold parameter is quantified from 0 to 100. In some instances, the image filter intensity parameter is quantified from 0 to 100. In some embodiments, the quantified parameters of the image filters are inputted into the machine learning algorithm in a predetermined order. In some instances, the quantified parameters of the image filters are inputted into the machine learning algorithm in the order of: 1) enabled; 2) smooth; 3) sharpen; 4) blur; 5) threshold; 6) gamma correction; 7) edges; 8) invert and 9) intensity.

In some embodiments, calculating an adjustment to one or more of the quantified parameters of the image filters includes determining accuracy and loss statistics of the generated dynamic particle classification algorithm. In some instances, the accuracy and loss statistics of the dynamic particle classification algorithm is calculated by an iterative optimization approach. In certain instances, the iterative optimization approach is a first-order optimization algorithm. In some instances, the accuracy and loss statistics of the dynamic particle classification algorithm is calculated by a gradient descent algorithm. In certain instances, the accuracy and loss statistics of the dynamic particle classification algorithm is calculated by backpropagation. In some embodiments, methods include adjusting one or more of the image filters based on the calculated accuracy and loss statistics. In some instances, each one of the image filters is iteratively adjusted in each photodetector channel to converge on an optimized set of image filters for the dynamic particle classification algorithm. In certain instances, methods include applying the adjusted image filters to a plurality of single cell images generated for cells in a flow stream (e.g., in a flow stream of a flow cytometer).

In some embodiments, methods include irradiating the particles in the flow stream with a light source. In some instances, the light source includes one or more lasers. In some instances, light is detected with a light detection system having a plurality of photodetectors. In some embodiments, one or more of the photodetectors is a photomultiplier tube. In some embodiments one or more of the photodetectors is a photodiode (e.g., an avalanche photodiode, APD). In certain embodiments, the light detection system includes a photodetector array, such as a photodetector array having a plurality of photodiodes or charged coupled devices (CCDs).

Aspects of the present disclosure also include systems for practicing the subject methods. Systems according to certain embodiments include a light source configured to irradiate a sample in a flow stream; a light detection system having a plurality of photodetectors; and a processor with memory operably coupled to the processor where the memory includes instructions stored thereon, which when executed by the processor, cause the processor to input into a machine learning algorithm one or more training data sets having a plurality of images of particles and quantified parameters of a plurality of image filters, generate a dynamic particle classification algorithm based on the training data sets and the quantified parameters of the image filters and calculate an adjustment to one or more of the quantified parameters of the image filters.

In some embodiments, the light detection system is configured to detect light from particles in the sample in a plurality of photodetector channels. In some embodiments, each training data set includes one or more unfiltered images of particles. In some embodiments, each training data set includes one or more ground-truth images of particles. In certain embodiments, the machine learning algorithm employed by the system is a neural network. In some instances, system employ a machine learning algorithm such as an artificial neural network, a convolutional neural network or a recurrent neural network.

In some embodiments, systems include memory having instructions stored thereon for quantifying the image filters in a plurality of photodetector channels. In some instances, the memory includes instructions for the image filters in one or more fluorescence photodetector channels. In some instances, the memory includes instructions for quantifying the parameters of the image filters for at least a plurality of the photodetector channels. In certain instances, the memory includes instructions for quantifying the parameters of the image filters for all of the photodetector channels.

In some embodiments, the system includes memory having instructions for quantifying whether a photodetector channel is enabled or not enabled. In some instances, the memory includes instructions for quantifying a photodetector channel as being enabled as a 1 and a photodetector channel as being not enabled as a 0. In certain instances, the memory includes instructions for designating a photodetector channel as being enabled or not enabled before quantifying each subsequent parameter of the image filters.

In some embodiments, the memory includes instructions to select from a plurality of image filter parameters, such as a smooth image filter parameter, a sharpen image filter parameter, a blur image filter parameter, a threshold image filter parameter, a gamma correction image filter parameter, an edge image filter parameter, an invert image filter parameter and an intensity image filter parameter. In some embodiments, the memory includes instructions to quantify the image filter parameter as binary, such as being designated as a 1 (i.e., the memory includes instructions to apply the image filter parameter) or as a 0 (i.e., the memory includes instructions to not apply the image filter parameter). In some instances, the memory includes instructions to quantify the image filter parameter to be an integer within a predetermined range, such as from 0 to 2, such as from 0 to 5, such as from 0 to 8, such as from 0 to 10, such as from 0 to 20, such as from 0 to 25, such as from 0 to 50, such as from 0 to 100. In some instances, the memory includes instructions for quantifying the image filter smooth parameter as a 1 or as a 0. In some instances, the memory includes instructions for quantifying the sharpen parameter as a 1 or as a 0. In some instances, the memory includes instructions for quantifying the edges parameter as a 1 or as a 0. In some instances, the memory includes instructions for quantifying the image filter gamma correction parameter from 0 to 2. In some instances, the memory includes instructions for quantifying the image filter blur parameter from 0 to 8. In some instances, the memory includes instructions for quantifying the image filter threshold parameter from 0 to 100. In some instances, the memory includes instructions for quantifying the image filter intensity parameter from 0 to 100.

In some embodiments, the memory includes instructions for inputting the quantified parameters of the image filters into the machine learning algorithm in a predetermined order. In some instances, the memory includes instructions for inputting the quantified parameters of the image filters into the machine learning algorithm in the order of: 1) enabled; 2) smooth; 3) sharpen; 4) blur; 5) threshold; 6) gamma correction; 7) edges; 8) invert and 9) intensity.

In embodiments, the system includes memory having instructions for calculating an adjustment to one or more of the quantified parameters of the image filters. In some embodiments, the memory includes instructions for determining accuracy and loss statistics of the generated dynamic particle classification algorithm. In some instances, the memory includes instructions for calculating the accuracy and loss statistics of the dynamic particle classification algorithm by an iterative optimization approach. In certain instances, the iterative optimization approach is a first-order optimization algorithm. In some instances, the memory includes instructions for calculating the accuracy and loss statistics of the dynamic particle classification algorithm by a gradient descent algorithm. In certain instances, the memory includes instructions for calculating the accuracy and loss statistics of the dynamic particle classification algorithm by backpropagation. In some embodiments, the memory includes instructions for adjusting one or more of the image filters based on the calculated accuracy and loss statistics. In some instances, the memory includes instructions to iteratively adjust each one of the image filters in each photodetector channel to converge on an optimized set of image filters for the dynamic particle classification algorithm. In certain instances, the memory includes instructions for applying the adjusted image filters to a plurality of single cell images generated for cells in a flow stream (e.g., in a flow stream of a flow cytometer).

Non-transitory computer readable storage medium having instructions with algorithm for determining image filters for classifying particles of a sample in a particle analyzer are also described. Non-transitory computer readable storage medium according to certain embodiments have instructions for inputting into a machine learning algorithm one or more training data sets having a plurality of images of particles and quantified parameters of a plurality of image filters, instructions for generating a dynamic particle classification algorithm based on the training data sets and the quantified parameters of the image filters and instructions for calculating an adjustment to one or more of the quantified parameters of the image filters.

In some embodiments, non-transitory computer readable storage medium include instructions for detecting light from particles in a plurality of photodetector channels. In some instances, each training data set includes one or more unfiltered images of particles. In some embodiments, each training data set includes one or more ground-truth images of particles. In certain embodiments, the machine learning algorithm employed is a neural network. In some instances, the machine learning algorithm is selected from an artificial neural network, a convolutional neural network or a recurrent neural network.

In some embodiments, non-transitory computer readable storage medium include instructions for quantifying the image filters in a plurality of photodetector channels. In some instances, non-transitory computer readable storage medium include instructions for the image filters in one or more fluorescence photodetector channels. In some instances, non-transitory computer readable storage medium include instructions for quantifying the parameters of the image filters for at least a plurality of the photodetector channels. In certain instances, non-transitory computer readable storage medium include instructions for quantifying the parameters of the image filters for all of the photodetector channels.

In some embodiments, non-transitory computer readable storage medium include instructions for quantifying whether a photodetector channel is enabled or not enabled. In some instances, non-transitory computer readable storage medium include instructions for quantifying a photodetector channel as being enabled as a 1 and a photodetector channel as being not enabled as a 0. In certain instances, non-transitory computer readable storage medium include instructions for designating a photodetector channel as being enabled or not enabled before quantifying each subsequent parameter of the image filters.

In some embodiments, non-transitory computer readable storage medium include instructions to select from a plurality of image filter parameters, such as a smooth image filter parameter, a sharpen image filter parameter, a blur image filter parameter, a threshold image filter parameter, a gamma correction image filter parameter, an edge image filter parameter, an invert image filter parameter and an intensity image filter parameter. In some embodiments, non-transitory computer readable storage medium include instructions to quantify the image filter parameter as binary, such as being designated as a 1 or as a 0. In some instances, non-transitory computer readable storage medium include instructions to quantify the image filter parameter to be an integer within a predetermined range, such as from 0 to 2, such as from 0 to 5, such as from 0 to 8, such as from 0 to 10, such as from 0 to 20, such as from 0 to 25, such as from 0 to 50, such as from 0 to 100. In some instances, non-transitory computer readable storage medium include instructions for quantifying the image filter smooth parameter as a 1 or as a 0. In some instances, non-transitory computer readable storage medium include instructions for quantifying the sharpen parameter as a 1 or as a 0. In some instances, the memory includes instructions for quantifying the edges parameter as a 1 or as a 0. In some instances, non-transitory computer readable storage medium include instructions for quantifying the image filter gamma correction parameter from 0 to 2. In some instances, non-transitory computer readable storage medium include instructions for quantifying the image filter blur parameter from 0 to 8. In some instances, non-transitory computer readable storage medium include instructions for quantifying the image filter threshold parameter from 0 to 100. In some instances, non-transitory computer readable storage medium include instructions for quantifying the image filter intensity parameter from 0 to 100.

In some embodiments, non-transitory computer readable storage medium include instructions for inputting the quantified parameters of the image filters into the machine learning algorithm in a predetermined order. In some instances, non-transitory computer readable storage medium include instructions for inputting the quantified parameters of the image filters into the machine learning algorithm in the order of: 1) enabled; 2) smooth; 3) sharpen; 4) blur; 5) threshold; 6) gamma correction; 7) edges; 8) invert and 9) intensity.

In embodiments, non-transitory computer readable storage medium include instructions for calculating an adjustment to one or more of the quantified parameters of the image filters. In some embodiments, non-transitory computer readable storage medium include instructions for determining accuracy and loss statistics of the generated dynamic particle classification algorithm. In some instances, non-transitory computer readable storage medium include instructions for calculating the accuracy and loss statistics of the dynamic particle classification algorithm by an iterative optimization approach. In certain instances, the iterative optimization approach is a first-order optimization algorithm. In some instances, non-transitory computer readable storage medium include instructions for calculating the accuracy and loss statistics of the dynamic particle classification algorithm by a gradient descent algorithm. In certain instances, non-transitory computer readable storage medium include instructions for calculating the accuracy and loss statistics of the dynamic particle classification algorithm by backpropagation. In some embodiments, non-transitory computer readable storage medium include instructions for adjusting one or more of the image filters based on the calculated accuracy and loss statistics. In some instances, non-transitory computer readable storage medium include instructions to iteratively adjust each one of the image filters in each photodetector channel to converge on an optimized set of image filters for the dynamic particle classification algorithm. In certain instances, non-transitory computer readable storage medium include instructions for applying the adjusted image filters to a plurality of single cell images generated for cells in a flow stream (e.g., in a flow stream of a flow cytometer).

### BRIEF DESCRIPTION OF THE FIGURES

The invention may be best understood from the following detailed description when read in conjunction with the accompanying drawings. Included in the drawings are the following figures:
**FIG. 1** depicts an example of quantified image filter parameters for inputting into a machine learning algorithm according to certain embodiments.
**FIG. 2** depicts a flow chart for determining image filters for classifying particles of a sample according to certain embodiments.
**FIG. 3A** depicts an image-enabled particle sorter according to certain embodiments. **FIG. 3B** depicts image-enabled particle sorting data processing according to certain embodiments.
**FIG. 4A** depicts a functional block diagram of a particle analysis system according to certain embodiments. **FIG. 4B** depicts a flow cytometer according to certain embodiments.
**FIG. 5** depicts a functional block diagram for one example of a particle analyzer control system according to certain embodiments.
**FIG. 6A** depicts a schematic drawing of a particle sorter system according to certain embodiments.
**FIG. 6B** depicts a schematic drawing of a particle sorter system according to certain embodiments.

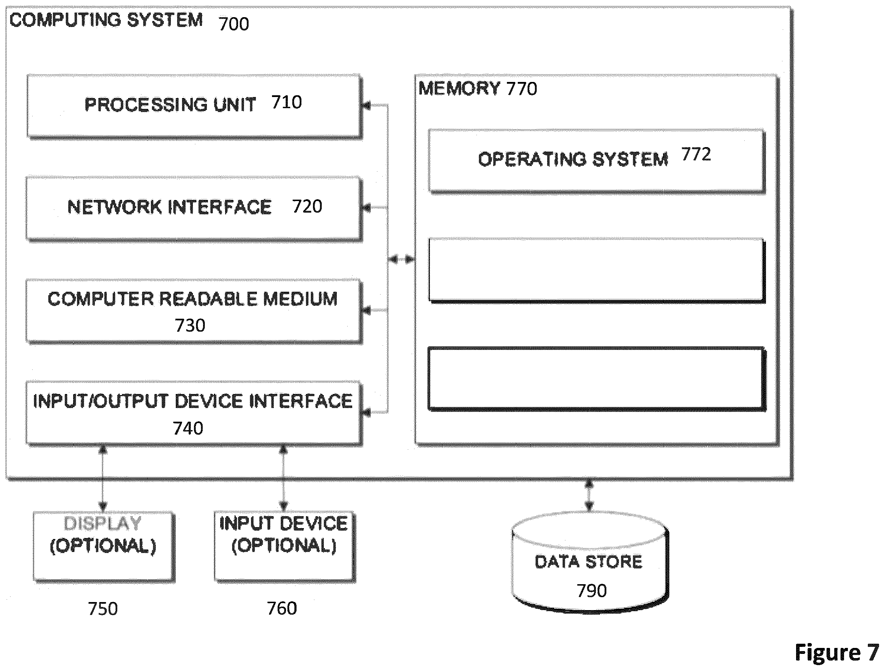

**FIG. 7** depicts a block diagram of a computing system according to certain embodiments.

### DETAILED DESCRIPTION

Aspects of the present disclosure include methods for determining image filters for classifying particles of a sample (e.g., cells of a biological sample) in a particle analyzer. Methods according to certain embodiments include inputting into a machine learning algorithm one or more training data sets having a plurality of images of particles and quantified parameters of image filters, generating a dynamic particle classification algorithm based on the training data sets and the quantified parameters of the image filters and calculating an adjustment to one or more of the quantified parameters of the image filters. Systems and non-transitory computer readable storage medium for practicing the subject methods are also described.

Before the present invention is described in greater detail, it is to be understood that this invention is not limited to particular embodiments described, as such may, of course, vary. It is also to be understood that the terminology used herein is for the purpose of describing particular embodiments only, and is not intended to be limiting, since the scope of the present invention will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the invention. The upper and lower limits of these smaller ranges may independently be included in the smaller ranges and are also encompassed within the invention, subject to any specifically excluded limit in the stated range. Where the stated range includes one or both of the limits, ranges excluding either or both of those included limits are also included in the invention.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, representative illustrative methods and materials are now described.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope or spirit of the present invention. Any recited method can be carried out in the order of events recited or in any other order which is logically possible.

As summarized above, the present disclosure provides methods for determining image filters for classifying particles of a sample (e.g., cells of a biological sample) in a particle analyzer. In further describing embodiments of the disclosure, methods for determining and adjusting parameters of image filters with a dynamic particle classification algorithm such as by iterative optimization or by a gradient descent algorithm are first described in greater detail. Next, systems and non-transitory computer readable storage media having instructions for practicing the subject methods are described.

### METHODS FOR DETERMINING IMAGE FILTERS FOR CLASSIFYING PARTICLES IN A FLOW STREAM

Aspects of the present disclosure include methods for determining image filters for classifying particles of a sample in a flow stream, such as cells of a biological sample propagated in a flow stream. As described in greater detail below, the subject methods provide for increasing the sensitivity and precision of classifying particles of a sample. In some instances, the precision of clustering particles of a sample is increased. In certain instances, the precision of particle sorting gates is increased when applying the generated image filters in a particle sorting algorithm. In some instances, the methods described herein in certain instances provide for generating image filters which can be used to improve classification in cluster analysis, including where no changes are made to the hardware components (e.g., photodetectors) of a particle analyzer system. In some instances, the determined image filters can increase the precision of particle classification by 5% or more, such as by 10% or more, such as by 15% or more, such as by 25% or more, such as by 50% or more, such as by 75% or more and including by 99% or more. In some embodiments, the calculated data signal filter can be used to adjust and optimize thresholds for a trigger metric in detecting particles of a sample. For example, the number of particles that are misclassified (e.g., where the particle is incorrectly identified or categorized) when applying the image filters generated by the subject methods in a cluster analysis is reduced by 5% or more, such as by 10% or more, such as by 15% or more, such as by 25% or more, such as by 50% or more, such as by 75% or more and including by 99% or more.

In some embodiments, the subject methods provide for improved precision in identifying or classifying small particles in a flow stream, such as where the particles have a diameter of 1000 nm or less, such as 900 nm or less, such as 800 nm or less, such as 700 nm or less, such as 600 nm or less, such as 500 nm or less, such as 400 nm or less, such as 300 nm or less and including particles that have a diameter of 200 nm or less.

In practicing the subject methods, one or more training data sets having a plurality of particle images are inputted into a machine learning algorithm. Any convenient machine learning algorithm can be implemented where machine learning algorithms of interest can include, but are not limited to a linear regression algorithm, a logistic regression algorithm, a Naive Bayes algorithm, a k-nearest neighbor (kNN) algorithm, a Random forest algorithm, decision tree algorithm, a support vector machine algorithm, a gradient boosting algorithm and a clustering algorithm. In certain embodiments, the machine learning algorithm is a neural network. In some instances, the machine learning algorithm is a neural network such as an artificial neural network, a convolutional neural network or a recurrent neural network. In certain instances, the machine learning algorithm is a python script.

In some instances, training data sets inputted into the machine learning algorithm have 2 or more images of particles, such as 3 or more, such as 5 or more, such as 10 or more, such as 15 or more, such as 20 or more, such as 25 or more, such as 50 or more, such as 100 or more, such as 250 or more, such as 500 or more, such as 750 or more and including inputting into the machine learning algorithm training data sets having 1000 or more images of particles. In some instances, the training data sets include reference images of particles, such as where the training data sets will include 2 or more references images, such as such as 3 or more, such as 5 or more, such as 10 or more, such as 15 or more, such as 20 or more, such as 25 or more, such as 50 or more, such as 100 or more, such as 250 or more, such as 500 or more, such as 750 or more and including 1000 or more reference particle images. In certain instances, the training data sets may include one or more images of particle clusters, such as a particle cluster which forms a doublet in a generated data signal.

In some embodiments, the training data set includes one or more unfiltered images of particles, such as 2 or more unfiltered images, such as 3 or more, such as 5 or more, such as 10 or more, such as 15 or more, such as 20 or more, such as 25 or more, such as 50 or more, such as 100 or more, such as 250 or more, such as 500 or more, such as 750 or more and including 1000 or more unfiltered images. In certain embodiments, each training data set includes one or more ground-truth images of the particles, such as 2 or more ground-truth images, such as 3 or more, such as 5 or more, such as 10 or more, such as 15 or more, such as 20 or more, such as 25 or more, such as 50 or more, such as 100 or more, such as 250 or more, such as 500 or more, such as 750 or more and including 1000 or more ground-truth images.

In embodiments, one or more quantified parameters of the image filters are inputted into the machine learning algorithm. The image parameters inputted into the machine learning algorithm are quantified for one or more photodetector channels of the light detection system. In certain instances, the parameters of the image filters are quantified for all of the photodetector channels of the light detection system. For example, the parameters of the image filters may be quantified for the scattered light photodetector channels (e.g., forward-scattered light, side-scattered light), the light absorption photodetector channels and the fluorescence photodetector channels.

In some instances, the light detection system includes 4 or more fluorescence photodetector channels, such as 8 or more, such as 16 or more, such as 32 or more, such as 64 or more, such as 128 or more and including 256 or more fluorescence photodetector channels. In some instances, the parameters of the image filters are quantified for one or more fluorescence photodetector channels, such as 2 or more, such as 4 or more, such as 8 or more, such as 16 or more, such as 32 or more, such as 64 or more, such as 128 or more and including where the parameters of the image filters are quantified for 256 or more fluorescence photodetector channels. For example, the parameters of the image filters may be quantified in 5% or more of the fluorescence photodetector channels, such as 10% or more, such as 25% or more, such as 50% or more, such as 75% or more and including 90% or more. In certain instances, the parameters of the image filters inputted into the machine learning algorithm are quantified in all (i.e., 100%) of the fluorescence photodetector channels. In certain embodiments, parameters of the image filters may be quantified for the scattered light photodetector channels (e.g., forward-scattered light, side-scattered light), the light absorption photodetector channels and the fluorescence photodetector channels.

In some embodiments, the plurality of image filters includes one or more image filter parameters selected from smooth, sharpen, blur, threshold, gamma correction, edges, invert and intensity. In some instances, the parameter of the image filter is binary, such as being quantified as a 1 (i.e., image filter parameter is being applied) or a 0 (i.e., image filter parameter is not being applied). In some instances, the parameter of the image filter is quantified to be within a predetermined range, such as from 0 to 2, such as from 0 to 5, such as from 0 to 8, such as from 0 to 10, such as from 0 to 20, such as from 0 to 25, such as from 0 to 50, such as from 0 to 100. In some instances, the image filter smooth parameter is quantified as a 1 or as a 0. In some instances, the image filter sharpen parameter is quantified as a 1 or as a 0. In some instances, the image filter edges parameter is quantified as a 1 or as a 0. In some instances, the image filter gamma correction parameter is quantified from 0 to 2. In some instances, the image filter blur parameter is quantified from 0 to 8. In some instances, the image filter threshold parameter is quantified from 0 to 100. In some instances, the image filter intensity parameter is quantified from 0 to 100.

In some embodiments, the quantified parameters of the image filters are inputted into the machine learning algorithm in a predetermined order. In some instances, the order of application of individual filters affects the generated image. For example, smoothing followed by sharpening generates a different image than sharpening followed by smoothing. In certain instances, the enablement of image filters (e.g., image filter parameter enabled) is applied first. For example, enabled image filter may be inputted as a 1 or as a 0. Where the enable image filter is inputted as a 0, each of the subsequent image parameters (e.g., smooth, sharpen, blur, threshold, gamma correction, edge, invert and intensity) is in some instances, inputted as a 0 since the photodetector channel is not enabled for inputting image filter parameters. In certain, the image filter parameter intensity is applied last. In some instances, the quantified parameters of the image filters are inputted into the machine learning algorithm in the order of: 1) enabled; 2) smooth; 3) sharpen; 4) blur; 5) threshold; 6) gamma correction; 7) edges; 8) invert and 9) intensity.

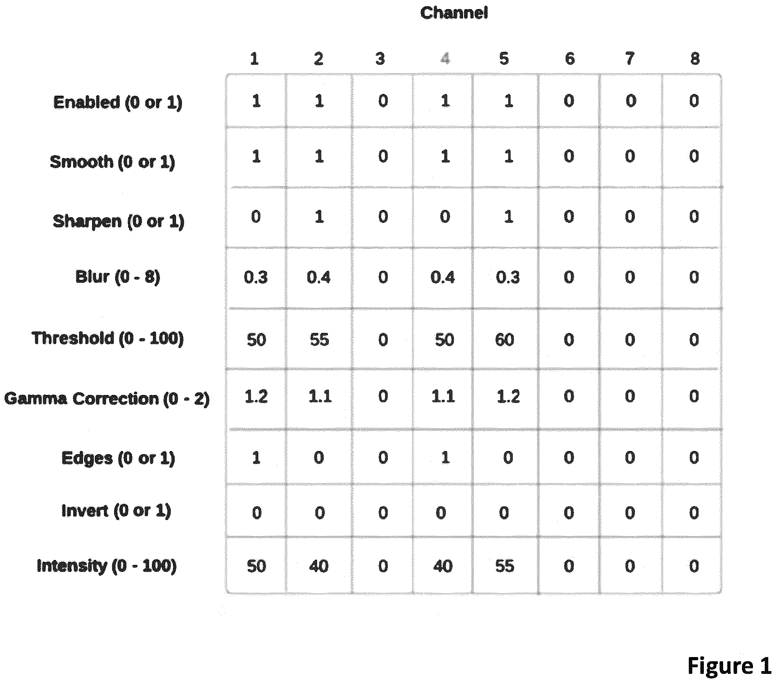

Figure 1 depicts an example of quantified image filter parameters for inputting into a machine learning algorithm according to certain embodiments. The image filter parameters smooth, sharpen, blur, threshold, gamma correction, edge, invert and intensity are quantified in 8 different photodetector channels. In this example, the quantified image filter parameters are inputted in the order of 1) enabled; 2) smooth; 3) sharpen; 4) blur; 5) threshold; 6) gamma correction; 7) edges; 8) invert and 9) intensity where the image parameters enabled, smooth, sharpen, edges and invert are binary (inputted as a 0 or 1). The blur image parameter is inputted as a quantity of from 0 to 8. The threshold image parameter of is imputed as a quantity of from 0 to 100. The gamma correction image parameter is inputted as a quantity of from 0 to 2 and the intensity image parameter is inputted as a quantity of from 0 to 100.

In embodiments, an adjustment to one or more of the quantified parameters of the image filters is calculated. In some instances, calculating an adjustment to one or more of the quantified parameters of the image filters includes determining accuracy and loss statistics of the generated dynamic particle classification algorithm. In some instances, the accuracy and loss statistics of the dynamic particle classification algorithm is calculated by an iterative optimization approach. In certain instances, the iterative optimization approach is a first-order optimization algorithm. In some instances, the accuracy and loss statistics of the dynamic particle classification algorithm is calculated by a gradient descent algorithm. In certain instances, the accuracy and loss statistics of the dynamic particle classification algorithm is calculated by backpropagation. In some embodiments, methods include adjusting one or more of the image filters based on the calculated accuracy and loss statistics. In some instances, each one of the image filters is iteratively adjusted in each photodetector channel to converge on an optimized set of image filters for the dynamic particle classification algorithm.

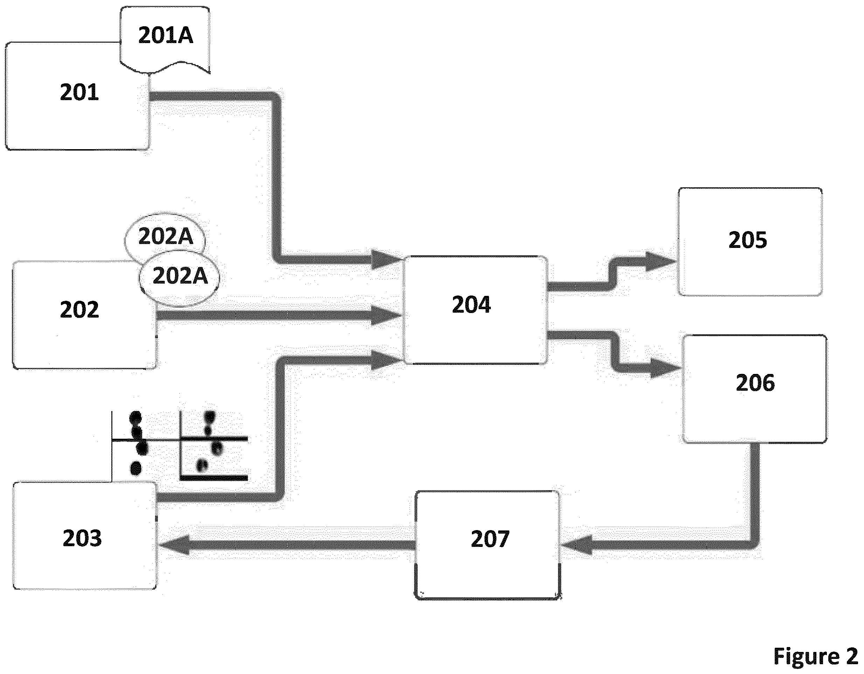

Figure 2 depicts a flow chart for determining image filters for classifying particles of a sample according to certain embodiments. In some instances, the workflow depicted in Figure 2 iteratively adjusts the composition of image filters in each of the photodetector channels to converge on an optimal set of image filters for particles of the sample. A training data set 202 composed of a plurality of images from training populations 202A and 202B and a set of quantified parameters of image filters 203 in each photodetector channel is inputted into a machine learning command line 204 of a machine learning algorithm 201 programmed with learning script 201A (e.g., python script). The machine learning algorithm generates a dynamic particle classification machine learning model 205 for classifying particles of a sample. Machine learning command line 204 also generates accuracy and loss statistics 206, which in some instances reflects how well the dynamic particle classification model classifies particles of a new population. Image filter adjustments 207 to one or more of the image filter parameters is calculated based on the accuracy and loss statistics 206 which can be fed back into the machine learning command line to adjust the generated dynamic particle classification machine learning model 205.

In some embodiments, methods further include applying the determined image filters to classify particles of a sample in a flow stream. In some instances, the particles in the flow stream are irradiated with a light source and light from the sample is detected with a light detection system having a plurality of photodetectors. In some embodiments, the sample is a biological sample. The term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In certain embodiments, the biological sample is a liquid sample, such as blood or derivative thereof, e.g., plasma, tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

In certain embodiments the source of the sample is a "mammal" or "mammalian", where these terms are used broadly to describe organisms which are within the class mammalia, including the orders carnivore (e.g., dogs and cats), rodentia (e.g., mice, guinea pigs, and rats), and primates (e.g., humans, chimpanzees, and monkeys). In some instances, the subjects are humans. The methods may be applied to samples obtained from human subjects of both genders and at any stage of development (i.e., neonates, infant, juvenile, adolescent, adult), where in certain embodiments the human subject is a juvenile, adolescent or adult. While the present invention may be applied to samples from a human subject, it is to be understood that the methods may also be carried-out on samples from other animal subjects (that is, in "non-human subjects") such as, but not limited to, birds, mice, rats, dogs, cats, livestock and horses.

In practicing the subject methods, a sample having particles (e.g., in a flow stream of a flow cytometer) is irradiated with light from a light source. In some embodiments, the light source is a broadband light source, emitting light having a broad range of wavelengths, such as for example, spanning 50 nm or more, such as 100 nm or more, such as 150 nm or more, such as 200 nm or more, such as 250 nm or more, such as 300 nm or more, such as 350 nm or more, such as 400 nm or more and including spanning 500 nm or more. For example, one suitable broadband light source emits light having wavelengths from 200 nm to 1500 nm. Another example of a suitable broadband light source includes a light source that emits light having wavelengths from 400 nm to 1000 nm. Where methods include irradiating with a broadband light source, broadband light source protocols of interest may include, but are not limited to, a halogen lamp, deuterium arc lamp, xenon arc lamp, stabilized fiber-coupled broadband light source, a broadband LED with continuous spectrum, superluminescent emitting diode, semiconductor light emitting diode, wide spectrum LED white light source, an multi-LED integrated white light source, among other broadband light sources or any combination thereof.

In other embodiments, methods include irradiating with a narrow band light source emitting a particular wavelength or a narrow range of wavelengths, such as for example with a light source which emits light in a narrow range of wavelengths like a range of 50 nm or less, such as 40 nm or less, such as 30 nm or less, such as 25 nm or less, such as 20 nm or less, such as 15 nm or less, such as 10 nm or less, such as 5 nm or less, such as 2 nm or less and including light sources which emit a specific wavelength of light (i.e., monochromatic light). Where methods include irradiating with a narrow band light source, narrow band light source protocols of interest may include, but are not limited to, a narrow wavelength LED, laser diode or a broadband light source coupled to one or more optical bandpass filters, diffraction gratings, monochromators or any combination thereof.

In certain embodiments, methods include irradiating the sample with one or more lasers. As discussed above, the type and number of lasers will vary depending on the sample as well as desired light collected and may be a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCI) excimer laser or xenon-fluorine (XeF) excimer laser or a combination thereof. In others instances, the methods include irradiating the flow stream with a dye laser, such as a stilbene, coumarin or rhodamine laser. In yet other instances, methods include irradiating the flow stream with a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, methods include irradiating the flow stream with a solid-state laser, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof.

The sample may be irradiated with one or more of the above-mentioned light sources, such as 2 or more light sources, such as 3 or more light sources, such as 4 or more light sources, such as 5 or more light sources and including 10 or more light sources. The light source may include any combination of types of light sources. For example, in some embodiments, the methods include irradiating the sample in the flow stream with an array of lasers, such as an array having one or more gas lasers, one or more dye lasers and one or more solid-state lasers.

The sample may be irradiated with wavelengths ranging from 200 nm to 1500 nm, such as from 250 nm to 1250 nm, such as from 300 nm to 1000 nm, such as from 350 nm to 900 nm and including from 400 nm to 800 nm. For example, where the light source is a broadband light source, the sample may be irradiated with wavelengths from 200 nm to 900 nm. In other instances, where the light source includes a plurality of narrow band light sources, the sample may be irradiated with specific wavelengths in the range from 200 nm to 900 nm. For example, the light source may be plurality of narrow band LEDs (1 nm - 25 nm) each independently emitting light having a range of wavelengths between 200 nm to 900 nm. In other embodiments, the narrow band light source includes one or more lasers (such as a laser array) and the sample is irradiated with specific wavelengths ranging from 200 nm to 700 nm, such as with a laser array having gas lasers, excimer lasers, dye lasers, metal vapor lasers and solid-state laser as described above.

Where more than one light source is employed, the sample may be irradiated with the light sources simultaneously or sequentially, or a combination thereof. For example, the sample may be simultaneously irradiated with each of the light sources. In other embodiments, the flow stream is sequentially irradiated with each of the light sources. Where more than one light source is employed to irradiate the sample sequentially, the time each light source irradiates the sample may independently be 0.001 microseconds or more, such as 0.01 microseconds or more, such as 0.1 microseconds or more, such as 1 microsecond or more, such as 5 microseconds or more, such as 10 microseconds or more, such as 30 microseconds or more and including 60 microseconds or more. For example, methods may include irradiating the sample with the light source (e.g. laser) for a duration which ranges from 0.001 microseconds to 100 microseconds, such as from 0.01 microseconds to 75 microseconds, such as from 0.1 microseconds to 50 microseconds, such as from 1 microsecond to 25 microseconds and including from 5 microseconds to 10 microseconds. In embodiments where sample is sequentially irradiated with two or more light sources, the duration sample is irradiated by each light source may be the same or different.

The time period between irradiation by each light source may also vary, as desired, being separated independently by a delay of 0.001 microseconds or more, such as 0.01 microseconds or more, such as 0.1 microseconds or more, such as 1 microsecond or more, such as 5 microseconds or more, such as by 10 microseconds or more, such as by 15 microseconds or more, such as by 30 microseconds or more and including by 60 microseconds or more. For example, the time period between irradiation by each light source may range from 0.001 microseconds to 60 microseconds, such as from 0.01 microseconds to 50 microseconds, such as from 0.1 microseconds to 35 microseconds, such as from 1 microsecond to 25 microseconds and including from 5 microseconds to 10 microseconds. In certain embodiments, the time period between irradiation by each light source is 10 microseconds. In embodiments where sample is sequentially irradiated by more than two (i.e., 3 or more) light sources, the delay between irradiation by each light source may be the same or different.

The sample may be irradiated continuously or in discrete intervals. In some instances, methods include irradiating the sample in the sample with the light source continuously. In other instances, the sample in is irradiated with the light source in discrete intervals, such as irradiating every 0.001 millisecond, every 0.01 millisecond, every 0.1 millisecond, every 1 millisecond, every 10 milliseconds, every 100 milliseconds and including every 1000 milliseconds, or some other interval.

Depending on the light source, the sample may be irradiated from a distance which varies such as 0.01 mm or more, such as 0.05 mm or more, such as 0.1 mm or more, such as 0.5 mm or more, such as 1 mm or more, such as 2.5 mm or more, such as 5 mm or more, such as 10 mm or more, such as 15 mm or more, such as 25 mm or more and including 50 mm or more. Also, the angle or irradiation may also vary, ranging from 10° to 90°, such as from 15° to 85°, such as from 20° to 80°, such as from 25° to 75° and including from 30° to 60°, for example at a 90° angle.

In certain embodiments, methods include irradiating the sample with two or more beams of frequency shifted light. As described above, a light beam generator component may be employed having a laser and an acousto-optic device for frequency shifting the laser light. In these embodiments, methods include irradiating the acousto-optic device with the laser. Depending on the desired wavelengths of light produced in the output laser beam (e.g., for use in irradiating a sample in a flow stream), the laser may have a specific wavelength that varies from 200 nm to 1500 nm, such as from 250 nm to 1250 nm, such as from 300 nm to 1000 nm, such as from 350 nm to 900 nm and including from 400 nm to 800 nm. The acousto-optic device may be irradiated with one or more lasers, such as 2 or more lasers, such as 3 or more lasers, such as 4 or more lasers, such as 5 or more lasers and including 10 or more lasers. The lasers may include any combination of types of lasers. For example, in some embodiments, the methods include irradiating the acousto-optic device with an array of lasers, such as an array having one or more gas lasers, one or more dye lasers and one or more solid-state lasers.

Where more than one laser is employed, the acousto-optic device may be irradiated with the lasers simultaneously or sequentially, or a combination thereof. For example, the acousto-optic device may be simultaneously irradiated with each of the lasers. In other embodiments, the acousto-optic device is sequentially irradiated with each of the lasers. Where more than one laser is employed to irradiate the acousto-optic device sequentially, the time each laser irradiates the acousto-optic device may independently be 0.001 microseconds or more, such as 0.01 microseconds or more, such as 0.1 microseconds or more, such as 1 microsecond or more, such as 5 microseconds or more, such as 10 microseconds or more, such as 30 microseconds or more and including 60 microseconds or more. For example, methods may include irradiating the acousto-optic device with the laser for a duration which ranges from 0.001 microseconds to 100 microseconds, such as from 0.01 microseconds to 75 microseconds, such as from 0.1 microseconds to 50 microseconds, such as from 1 microsecond to 25 microseconds and including from 5 microseconds to 10 microseconds. In embodiments where the acousto-optic device is sequentially irradiated with two or more lasers, the duration the acousto-optic device is irradiated by each laser may be the same or different.

The time period between irradiation by each laser may also vary, as desired, being separated independently by a delay of 0.001 microseconds or more, such as 0.01 microseconds or more, such as 0.1 microseconds or more, such as 1 microsecond or more, such as 5 microseconds or more, such as by 10 microseconds or more, such as by 15 microseconds or more, such as by 30 microseconds or more and including by 60 microseconds or more. For example, the time period between irradiation by each light source may range from 0.001 microseconds to 60 microseconds, such as from 0.01 microseconds to 50 microseconds, such as from 0.1 microseconds to 35 microseconds, such as from 1 microsecond to 25 microseconds and including from 5 microseconds to 10 microseconds. In certain embodiments, the time period between irradiation by each laser is 10 microseconds. In embodiments where the acousto-optic device is sequentially irradiated by more than two (i.e., 3 or more) lasers, the delay between irradiation by each laser may be the same or different.

The acousto-optic device may be irradiated continuously or in discrete intervals. In some instances, methods include irradiating the acousto-optic device with the laser continuously. In other instances, the acousto-optic device is irradiated with the laser in discrete intervals, such as irradiating every 0.001 millisecond, every 0.01 millisecond, every 0.1 millisecond, every 1 millisecond, every 10 milliseconds, every 100 milliseconds and including every 1000 milliseconds, or some other interval.

Depending on the laser, the acousto-optic device may be irradiated from a distance which varies such as 0.01 mm or more, such as 0.05 mm or more, such as 0.1 mm or more, such as 0.5 mm or more, such as 1 mm or more, such as 2.5 mm or more, such as 5 mm or more, such as 10 mm or more, such as 15 mm or more, such as 25 mm or more and including 50 mm or more. Also, the angle or irradiation may also vary, ranging from 10° to 90°, such as from 15° to 85°, such as from 20° to 80°, such as from 25° to 75° and including from 30° to 60°, for example at a 90° angle.

In embodiments, methods include applying radiofrequency drive signals to the acousto-optic device to generate angularly deflected laser beams. Two or more radiofrequency drive signals may be applied to the acousto-optic device to generate an output laser beam with the desired number of angularly deflected laser beams, such as 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including 100 or more radiofrequency drive signals.

The angularly deflected laser beams produced by the radiofrequency drive signals each have an intensity based on the amplitude of the applied radiofrequency drive signal. In some embodiments, methods include applying radiofrequency drive signals having amplitudes sufficient to produce angularly deflected laser beams with a desired intensity. In some instances, each applied radiofrequency drive signal independently has an amplitude from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. Each applied radiofrequency drive signal has, in some embodiments, a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz.

In these embodiments, the angularly deflected laser beams in the output laser beam are spatially separated. Depending on the applied radiofrequency drive signals and desired irradiation profile of the output laser beam, the angularly deflected laser beams may be separated by 0.001 µm or more, such as by 0.005 µm or more, such as by 0.01 µm or more, such as by 0.05 µm or more, such as by 0.1 µm or more, such as by 0.5 µm or more, such as by 1 µm or more, such as by 5 µm or more, such as by 10 µm or more, such as by 100 µm or more, such as by 500 µm or more, such as by 1000 µm or more and including by 5000 µm or more. In some embodiments, the angularly deflected laser beams overlap, such as with an adjacent angularly deflected laser beam along a horizontal axis of the output laser beam. The overlap between adjacent angularly deflected laser beams (such as overlap of beam spots) may be an overlap of 0.001 µm or more, such as an overlap of 0.005 µm or more, such as an overlap of 0.01 µm or more, such as an overlap of 0.05 µm or more, such as an overlap of 0.1 µm or more, such as an overlap of 0.5 µm or more, such as an overlap of 1 µm or more, such as an overlap of 5 µm or more, such as an overlap of 10 µm or more and including an overlap of 100 µm or more.

In certain instances, the flow stream is irradiated with a plurality of beams of frequency-shifted light and a cell in the flow stream is imaged by fluorescence imaging using radiofrequency tagged emission (FIRE) to generate a frequencyencoded image, such as those described in Diebold, et al. Nature Photonics Vol. 7(10); 806-810 (2013), as well as described in U.S. Patent Nos. 9,423,353; 9,784,661; 9,983,132; 10,006,852; 10,078,045; 10,036,699; 10,222,316; 10,288,546; 10,324,019; 10,408,758; 10,451,538; 10,620,111; and U.S. Patent Publication Nos. 2017/0133857; 2017/0328826; 2017/0350803; 2018/0275042; 2019/0376895 and 2019/0376894.

As discussed above, in embodiments light from the irradiated sample is conveyed to a light detection system as described in greater detail below and measured by the plurality of photodetectors. In some embodiments, methods include measuring the collected light over a range of wavelengths (e.g., 200 nm - 1000 nm). For example, methods may include collecting spectra of light over one or more of the wavelength ranges of 200 nm - 1000 nm. In yet other embodiments, methods include measuring collected light at one or more specific wavelengths. For example, the collected light may be measured at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In certain embodiments, methods including measuring wavelengths of light which correspond to the fluorescence peak wavelength of fluorophores. In some embodiments, methods include measuring collected light across the entire fluorescence spectrum of each fluorophore in the sample.

The collected light may be measured continuously or in discrete intervals. In some instances, methods include taking measurements of the light continuously. In other instances, the light is measured in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

Measurements of the collected light may be taken one or more times during the subject methods, such as 2 or more times, such as 3 or more times, such as 5 or more times and including 10 or more times. In certain embodiments, the light propagation is measured 2 or more times, with the data in certain instances being averaged.

Light from the sample may be measured at one or more wavelengths of, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring the collected light at 400 or more different wavelengths.

In some embodiments, methods further include sorting particles of the sample in the flow stream based on the classified particle populations. In some instances, methods for sorting components of sample include sorting particles (e.g., cells in a biological sample) with a particle sorting module having deflector plates, such as described in U.S. Patent Publication No. 2017/0299493, filed on March 28, 2017. , In certain embodiments, particles (e.g., cells) of the sample are sorted using a sort decision module having a plurality of sort decision units, such as those described in U.S. Patent Publication No. 2020/0256781. In some embodiments, the subject systems include a particle sorting module having deflector plates, such as described in U.S. Patent Publication No. 2017/0299493, filed on March 28, 2017.

### SYSTEMS FOR DETERMINING IMAGE FILTERS FOR CLASSIFYING PARTICLES IN A FLOW STREAM

Aspects of the present disclosure include systems for practicing the subject methods for determining image filters for classifying particles of a sample in a flow stream. Systems according to certain embodiments include a light source configured to irradiate a sample in a flow stream; a light detection system having a plurality of photodetectors; and a processor with memory operably coupled to the processor where the memory includes instructions stored thereon, which when executed by the processor, cause the processor to input into a machine learning algorithm one or more training data sets having a plurality of images of particles and quantified parameters of a plurality of image filters, generate a dynamic particle classification algorithm based on the training data sets and the quantified parameters of the image filters and calculate an adjustment to one or more of the quantified parameters of the image filters.

In some embodiments, systems include a light source configured to irradiate a sample having particles in a flow stream. In embodiments, the light source may be any suitable broadband or narrow band source of light. Depending on the components in the sample (e.g., cells, beads, non-cellular particles, etc.), the light source may be configured to emit wavelengths of light that vary, ranging from 200 nm to 1500 nm, such as from 250 nm to 1250 nm, such as from 300 nm to 1000 nm, such as from 350 nm to 900 nm and including from 400 nm to 800 nm. For example, the light source may include a broadband light source emitting light having wavelengths from 200 nm to 900 nm. In other instances, the light source includes a narrow band light source emitting a wavelength ranging from 200 nm to 900 nm. For example, the light source may be a narrow band LED (1 nm - 25 nm) emitting light having a wavelength ranging between 200 nm to 900 nm. In certain embodiments, the light source is a laser. In some instances, the subject systems include a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCI) excimer laser or xenon-fluorine (XeF) excimer laser or a combination thereof. In other instances, the subject systems include a dye laser, such as a stilbene, coumarin or rhodamine laser. In yet other instances, lasers of interest include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, the subject systems include a solid-state laser, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof.

In other embodiments, the light source is a non-laser light source, such as a lamp, including but not limited to a halogen lamp, deuterium arc lamp, xenon arc lamp, a light-emitting diode, such as a broadband LED with continuous spectrum, superluminescent emitting diode, semiconductor light emitting diode, wide spectrum LED white light source, an multi-LED integrated. In some instances, the non-laser light source is a stabilized fiber-coupled broadband light source, white light source, among other light sources or any combination thereof.

The light source may be positioned any suitable distance from the sample (e.g., the flow stream in a flow cytometer), such as at a distance of 0.001 mm or more from the flow stream, such as 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, the light source irradiate the sample at any suitable angle (e.g., relative the vertical axis of the flow stream), such as at an angle ranging from 10° to 90°, such as from 15° to 85°, such as from 20° to 80°, such as from 25° to 75° and including from 30° to 60°, for example at a 90° angle.

The light source may be configured to irradiate the sample continuously or in discrete intervals. In some instances, systems include a light source that is configured to irradiate the sample continuously, such as with a continuous wave laser that continuously irradiates the flow stream at the interrogation point in a flow cytometer. In other instances, systems of interest include a light source that is configured to irradiate the sample at discrete intervals, such as every 0.001 milliseconds, every 0.01 milliseconds, every 0.1 milliseconds, every 1 millisecond, every 10 milliseconds, every 100 milliseconds and including every 1000 milliseconds, or some other interval. Where the light source is configured to irradiate the sample at discrete intervals, systems may include one or more additional components to provide for intermittent irradiation of the sample with the light source. For example, the subject systems in these embodiments may include one or more laser beam choppers, manually or computer controlled beam stops for blocking and exposing the sample to the light source.

In some embodiments, the light source is a laser. Lasers of interest may include pulsed lasers or continuous wave lasers. For example, the laser may be a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCI) excimer laser or xenon-fluorine (XeF) excimer laser or a combination thereof; a dye laser, such as a stilbene, coumarin or rhodamine laser; a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof; a solid-state laser, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof; a semiconductor diode laser, optically pumped semiconductor laser (OPSL), or a frequency doubled- or frequency tripled implementation of any of the above mentioned lasers.

In certain embodiments, the light source is a light beam generator that is configured to generate two or more beams of frequency shifted light. In some instances, the light beam generator includes a laser, a radiofrequency generator configured to apply radiofrequency drive signals to an acousto-optic device to generate two or more angularly deflected laser beams. In these embodiments, the laser may be a pulsed lasers or continuous wave laser. For example lasers in light beam generators of interest may be a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCI) excimer laser or xenon-fluorine (XeF) excimer laser or a combination thereof; a dye laser, such as a stilbene, coumarin or rhodamine laser; a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof; a solid-state laser, such as a ruby laser, an Nd:YAG laser, NdCrYAG laser, Er:YAG laser, Nd:YLF laser, Nd:YVO4 laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof.

The acousto-optic device may be any convenient acousto-optic protocol configured to frequency shift laser light using applied acoustic waves. In certain embodiments, the acousto-optic device is an acousto-optic deflector. The acousto-optic device in the subject system is configured to generate angularly deflected laser beams from the light from the laser and the applied radiofrequency drive signals. The radiofrequency drive signals may be applied to the acousto-optic device with any suitable radiofrequency drive signal source, such as a direct digital synthesizer (DDS), arbitrary waveform generator (AWG), or electrical pulse generator.

In embodiments, a controller is configured to apply radiofrequency drive signals to the acousto-optic device to produce the desired number of angularly deflected laser beams in the output laser beam, such as being configured to apply 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including being configured to apply 100 or more radiofrequency drive signals.

In some instances, to produce an intensity profile of the angularly deflected laser beams in the output laser beam, the controller is configured to apply radiofrequency drive signals having an amplitude that varies such as from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. Each applied radiofrequency drive signal has, in some embodiments, a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz.

In certain embodiments, the controller has a processor having memory operably coupled to the processor such that the memory includes instructions stored thereon, which when executed by the processor, cause the processor to produce an output laser beam with angularly deflected laser beams having a desired intensity profile. For example, the memory may include instructions to produce two or more angularly deflected laser beams with the same intensities, such as 3 or more, such as 4 or more, such as 5 or more, such as 10 or more, such as 25 or more, such as 50 or more and including memory may include instructions to produce 100 or more angularly deflected laser beams with the same intensities. In other embodiments, the may include instructions to produce two or more angularly deflected laser beams with different intensities, such as 3 or more, such as 4 or more, such as 5 or more, such as 10 or more, such as 25 or more, such as 50 or more and including memory may include instructions to produce 100 or more angularly deflected laser beams with different intensities.

In certain embodiments, the controller has a processor having memory operably coupled to the processor such that the memory includes instructions stored thereon, which when executed by the processor, cause the processor to produce an output laser beam having increasing intensity from the edges to the center of the output laser beam along the horizontal axis. In these instances, the intensity of the angularly deflected laser beam at the center of the output beam may range from 0.1% to about 99% of the intensity of the angularly deflected laser beams at the edge of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the edge of the output laser beam along the horizontal axis. In other embodiments, the controller has a processor having memory operably coupled to the processor such that the memory includes instructions stored thereon, which when executed by the processor, cause the processor to produce an output laser beam having an increasing intensity from the edges to the center of the output laser beam along the horizontal axis. In these instances, the intensity of the angularly deflected laser beam at the edges of the output beam may range from 0.1% to about 99% of the intensity of the angularly deflected laser beams at the center of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the center of the output laser beam along the horizontal axis. In yet other embodiments, the controller has a processor having memory operably coupled to the processor such that the memory includes instructions stored thereon, which when executed by the processor, cause the processor to produce an output laser beam having an intensity profile with a Gaussian distribution along the horizontal axis. In still other embodiments, the controller has a processor having memory operably coupled to the processor such that the memory includes instructions stored thereon, which when executed by the processor, cause the processor to produce an output laser beam having a top hat intensity profile along the horizontal axis.

In embodiments, light beam generators of interest may be configured to produce angularly deflected laser beams in the output laser beam that are spatially separated. Depending on the applied radiofrequency drive signals and desired irradiation profile of the output laser beam, the angularly deflected laser beams may be separated by 0.001 µm or more, such as by 0.005 µm or more, such as by 0.01 µm or more, such as by 0.05 µm or more, such as by 0.1 µm or more, such as by 0.5 µm or more, such as by 1 µm or more, such as by 5 µm or more, such as by 10 µm or more, such as by 100 µm or more, such as by 500 µm or more, such as by 1000 µm or more and including by 5000 µm or more. In some embodiments, systems are configured to produce angularly deflected laser beams in the output laser beam that overlap, such as with an adjacent angularly deflected laser beam along a horizontal axis of the output laser beam. The overlap between adjacent angularly deflected laser beams (such as overlap of beam spots) may be an overlap of 0.001 µm or more, such as an overlap of 0.005 µm or more, such as an overlap of 0.01 µm or more, such as an overlap of 0.05 µm or more, such as an overlap of 0.1 µm or more, such as an overlap of 0.5 µm or more, such as an overlap of 1 µm or more, such as an overlap of 5 µm or more, such as an overlap of 10 µm or more and including an overlap of 100 µm or more.

In certain instances, light beam generators configured to generate two or more beams of frequency shifted light include laser excitation modules as described in Diebold, et al. Nature Photonics Vol. 7(10); 806-810 (2013) as well as described in U.S. Patent Nos. 9,423,353; 9,784,661; 9,983,132; 10,006,852; 10,078,045; 10,036,699; 10,222,316; 10,288,546; 10,324,019; 10,408,758; 10,451,538; 10,620,111; and U.S. Patent Publication Nos. 2017/0133857; 2017/0328826; 2017/0350803; 2018/0275042; 2019/0376895 and 2019/0376894.

In embodiments, systems include a light detection system having a plurality of photodetectors. Photodetectors of interest may include, but are not limited to optical sensors, such as active-pixel sensors (APSs), avalanche photodiodes (APDs), image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes, phototransistors, quantum dot photoconductors or photodiodes and combinations thereof, among other photodetectors. In certain embodiments, light from a sample is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors.

In some embodiments, light detection systems of interest include a plurality of photodetectors. In some instances, the light detection system includes a plurality of solid-state detectors such as photodiodes. In certain instances, the light detection system includes a photodetector array, such as an array of photodiodes. In these embodiments, the photodetector array may include 4 or more photodetectors, such as 10 or more photodetectors, such as 25 or more photodetectors, such as 50 or more photodetectors, such as 100 or more photodetectors, such as 250 or more photodetectors, such as 500 or more photodetectors, such as 750 or more photodetectors and including 1000 or more photodetectors. For example, the detector may be a photodiode array having 4 or more photodiodes, such as 10 or more photodiodes, such as 25 or more photodiodes, such as 50 or more photodiodes, such as 100 or more photodiodes, such as 250 or more photodiodes, such as 500 or more photodiodes, such as 750 or more photodiodes and including 1000 or more photodiodes.

The photodetectors may be arranged in any geometric configuration as desired, where arrangements of interest include, but are not limited to a square configuration, rectangular configuration, trapezoidal configuration, triangular configuration, hexagonal configuration, heptagonal configuration, octagonal configuration, nonagonal configuration, decagonal configuration, dodecagonal configuration, circular configuration, oval configuration as well as irregular patterned configurations. The photodetectors in the photodetector array may be oriented with respect to the other (as referenced in an X-Z plane) at an angle ranging from 10° to 180°, such as from 15° to 170°, such as from 20° to 160°, such as from 25° to 150°, such as from 30° to 120° and including from 45° to 90°. The photodetector array may be any suitable shape and may be a rectilinear shape, e.g., squares, rectangles, trapezoids, triangles, hexagons, etc., curvilinear shapes, e.g., circles, ovals, as well as irregular shapes, e.g., a parabolic bottom portion coupled to a planar top portion. In certain embodiments, the photodetector array has a rectangular-shaped active surface.

Each photodetector (e.g., photodiode) in the array may have an active surface with a width that ranges from 5 µm to 250 µm, such as from 10 µm to 225 µm, such as from 15 µm to 200 µm, such as from 20 µm to 175 µm, such as from 25 µm to 150 µm, such as from 30 µm to 125 µm and including from 50 µm to 100 µm and a length that ranges from 5 µm to 250 µm, such as from 10 µm to 225 µm, such as from 15 µm to 200 µm, such as from 20 µm to 175 µm, such as from 25 µm to 150 µm, such as from 30 µm to 125 µm and including from 50 µm to 100 µm, where the surface area of each photodetector (e.g., photodiode) in the array ranges from 25 to µm² to 10000 µm², such as from 50 to µm² to 9000 µm², such as from 75 to µm² to 8000 µm², such as from 100 to µm² to 7000 µm², such as from 150 to µm² to 6000 µm² and including from 200 to µm² to 5000 µm².

The size of the photodetector array may vary depending on the amount and intensity of the light, the number of photodetectors and the desired sensitivity and may have a length that ranges from 0.01 mm to 100 mm, such as from 0.05 mm to 90 mm, such as from 0.1 mm to 80 mm, such as from 0.5 mm to 70 mm, such as from 1 mm to 60 mm, such as from 2 mm to 50 mm, such as from 3 mm to 40 mm, such as from 4 mm to 30 mm and including from 5 mm to 25 mm. The width of the photodetector array may also vary, ranging from 0.01 mm to 100 mm, such as from 0.05 mm to 90 mm, such as from 0.1 mm to 80 mm, such as from 0.5 mm to 70 mm, such as from 1 mm to 60 mm, such as from 2 mm to 50 mm, such as from 3 mm to 40 mm, such as from 4 mm to 30 mm and including from 5 mm to 25 mm. As such, the active surface of the photodetector array may range from 0.1 mm² to 10000 mm², such as from 0.5 mm² to 5000 mm², such as from 1 mm² to 1000 mm², such as from 5 mm² to 500 mm², and including from 10 mm² to 100 mm².

Photodetectors of interest are configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths.

In some embodiments, photodetectors are configured to measure collected light over a range of wavelengths (e.g., 200 nm - 1000 nm). In certain embodiments, photodetectors of interest are configured to collect spectra of light over a range of wavelengths. For example, systems may include one or more detectors configured to collect spectra of light over one or more of the wavelength ranges of 200 nm - 1000 nm. In yet other embodiments, detectors of interest are configured to measure light from the sample in the flow stream at one or more specific wavelengths. For example, systems may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In certain embodiments, photodetectors may be configured to be paired with specific fluorophores, such as those used with the sample in a fluorescence assay. In some embodiments, photodetectors are configured to measure collected light across the entire fluorescence spectrum of each fluorophore in the sample.

The light detection system is configured to measure light continuously or in discrete intervals. In some instances, photodetectors of interest are configured to take measurements of the collected light continuously. In other instances, the light detection system is configured to take measurements in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

In embodiments, systems are configured to determine an optimal set of image filters for identifying and classifying particles in the sample. In certain instances, systems are configured to sort the identified or classified particles. In these embodiments, systems may include computer controlled systems where the systems further include one or more computers for complete automation or partial automation of a system for practicing methods described herein. In embodiments, systems include a computer having a computer readable storage medium with a computer program stored thereon, where the computer program includes a machine learning algorithm. The computer program may include any convenient machine learning algorithm such as a linear regression algorithm, a logistic regression algorithm, a Naïve Bayes algorithm, a k-nearest neighbor (kNN) algorithm, a Random forest algorithm, decision tree algorithm, a support vector machine algorithm, a gradient boosting algorithm and a clustering algorithm. In certain embodiments, the machine learning algorithm is a neural network. In some instances, the machine learning algorithm is a neural network such as an artificial neural network, a convolutional neural network or a recurrent neural network. In certain instances, the computer program of the subject systems includes a python script.

In some instances, the memory includes instructions for the image filters in one or more fluorescence photodetector channels. In some instances, the memory includes instructions for quantifying the parameters of the image filters for at least a plurality of the photodetector channels. In certain instances, the memory includes instructions for quantifying the parameters of the image filters for all of the photodetector channels.

In some embodiments, the system includes memory having instructions for quantifying whether a photodetector channel is enabled or not enabled. In some instances, the memory includes instructions for quantifying a photodetector channel as being enabled as a 1 and a photodetector channel as being not enabled as a 0. In certain instances, the memory includes instructions for designating a photodetector channel as being enabled or not enabled before quantifying each subsequent parameter of the image filters.

In some embodiments, the memory includes instructions to select from a plurality of image filter parameters, such as a smooth image filter parameter, a sharpen image filter parameter, a blur image filter parameter, a threshold image filter parameter, a gamma correction image filter parameter, an edge image filter parameter, an invert image filter parameter and an intensity image filter parameter. In some embodiments, the memory includes instructions to quantify the image filter parameter as binary, such as being designated as a 1 (i.e., the memory includes instructions to apply the image filter parameter) or as a 0 (i.e., the memory includes instructions to not apply the image filter parameter). In some instances, the memory includes instructions to quantify the image filter parameter to be an integer within a predetermined range, such as from 0 to 2, such as from 0 to 5, such as from 0 to 8, such as from 0 to 10, such as from 0 to 20, such as from 0 to 25, such as from 0 to 50, such as from 0 to 100. In some instances, the memory includes instructions for quantifying the image filter smooth parameter as a 1 or as a 0. In some instances, the memory includes instructions for quantifying the sharpen parameter as a 1 or as a 0. In some instances, the memory includes instructions for quantifying the edges parameter as a 1 or as a 0. In some instances, the memory includes instructions for quantifying the image filter gamma correction parameter from 0 to 2. In some instances, the memory includes instructions for quantifying the image filter blur parameter from 0 to 8. In some instances, the memory includes instructions for quantifying the image filter threshold parameter from 0 to 100. In some instances, the memory includes instructions for quantifying the image filter intensity parameter from 0 to 100.

In some embodiments, the memory includes instructions for inputting the quantified parameters of the image filters into the machine learning algorithm in a predetermined order. In some instances, the memory includes instructions for inputting the quantified parameters of the image filters into the machine learning algorithm in the order of: 1) enabled; 2) smooth; 3) sharpen; 4) blur; 5) threshold; 6) gamma correction; 7) edges; 8) invert and 9) intensity.

In embodiments, the system includes memory having instructions for calculating an adjustment to one or more of the quantified parameters of the image filters. In some embodiments, the memory includes instructions for determining accuracy and loss statistics of the generated dynamic particle classification algorithm. In some instances, the memory includes instructions for calculating the accuracy and loss statistics of the dynamic particle classification algorithm by an iterative optimization approach. In certain instances, the iterative optimization approach is a first-order optimization algorithm. In some instances, the memory includes instructions for calculating the accuracy and loss statistics of the dynamic particle classification algorithm by a gradient descent algorithm. In certain instances, the memory includes instructions for calculating the accuracy and loss statistics of the dynamic particle classification algorithm by backpropagation. In some embodiments, the memory includes instructions for adjusting one or more of the image filters based on the calculated accuracy and loss statistics. In some instances, the memory includes instructions to iteratively adjust each one of the image filters in each photodetector channel to converge on an optimized set of image filters for the dynamic particle classification algorithm. In certain instances, the memory includes instructions for applying the adjusted image filters to a plurality of single cell images generated for cells in a flow stream (e.g., in a flow stream of a flow cytometer).

Systems according to some embodiments, may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, other high level or low-level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. The processor may be any suitable analog or digital system. In some embodiments, the processor includes analog electronics which provide feedback control, such as for example negative feedback control.

The system memory may be any of a variety of known or future memory storage devices. Examples include any commonly available random-access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, a removable hard disk drive, or a diskette drive. Such types of memory storage devices typically read from, and/or write to, a program storage medium (not shown) such as, respectively, a compact disk, magnetic tape, removable hard disk, or floppy diskette. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

In some embodiments, a computer program product is described comprising a computer usable medium having control logic (computer software program, including program code) stored therein. The control logic, when executed by the processor the computer, causes the processor to perform functions described herein. In other embodiments, some functions are implemented primarily in hardware using, for example, a hardware state machine. Implementation of the hardware state machine so as to perform the functions described herein will be apparent to those skilled in the relevant arts.

Memory may be any suitable device in which the processor can store and retrieve data, such as magnetic, optical, or solid-state storage devices (including magnetic or optical disks or tape or RAM, or any other suitable device, either fixed or portable). The processor may include a general-purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the invention also include programming, e.g., in the form of computer program products, algorithms for use in practicing the methods as described above. Programming according to the present invention can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a a computer connected to a Wide Area Network ("WAN"), telephone network, satellite network, or any other suitable communication channel, including a mobile telephone (i.e., smartphone).

In some embodiments, systems according to the present disclosure may be configured to include a communication interface. In some embodiments, the communication interface includes a receiver and/or transmitter for communicating with a network and/or another device. The communication interface can be configured for wired or wireless communication, including, but not limited to, radio frequency (RF) communication (e.g., Radio-Frequency Identification (RFID), Zigbee communication protocols, WiFi, infrared, wireless Universal Serial Bus (USB), Ultra-Wide Band (UWB), Bluetooth^{®} communication protocols, and cellular communication, such as code division multiple access (CDMA) or Global System for Mobile communications (GSM).

In one embodiment, the communication interface is configured to include one or more communication ports, e.g., physical ports or interfaces such as a USB port, an RS-232 port, or any other suitable electrical connection port to allow data communication between the subject systems and other external devices such as a computer terminal (for example, at a physician's office or in hospital environment) that is configured for similar complementary data communication.

In one embodiment, the communication interface is configured for infrared communication, Bluetooth^{®} communication, or any other suitable wireless communication protocol to enable the subject systems to communicate with other devices such as computer terminals and/or networks, communication enabled mobile telephones, personal digital assistants, or any other communication devices which the user may use in conjunction.

In one embodiment, the communication interface is configured to provide a connection for data transfer utilizing Internet Protocol (IP) through a cell phone network, Short Message Service (SMS), wireless connection to a personal computer (PC) on a Local Area Network (LAN) which is connected to the internet, or WiFi connection to the internet at a WiFi hotspot.

In one embodiment, the subject systems are configured to wirelessly communicate with a server device via the communication interface, e.g., using a common standard such as 802.11 or Bluetooth^{®} RF protocol, or an IrDA infrared protocol. The server device may be another portable device, such as a smart phone, Personal Digital Assistant (PDA) or notebook computer; or a larger device such as a desktop computer, appliance, etc. In some embodiments, the server device has a display, such as a liquid crystal display (LCD), as well as an input device, such as buttons, a keyboard, mouse or touch-screen.

In some embodiments, the communication interface is configured to automatically or semi-automatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished in alternative embodiments using network or other types of remote communications. The output manager may also provide information generated by the processing module to a user at a remote location, e.g., over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a work station, or other computer type. They may be connected via any known or future type of cabling or other communication system including wireless systems, either networked or otherwise. They may be co-located or they may be physically separated. Various operating systems may be employed on any of the computer platforms, possibly depending on the type and/or make of computer platform chosen. Appropriate operating systems include Windows 10, Windows NT^{®}, Windows XP, Windows 7, Windows 8, iOS, Sun Solaris, Linux, OS/400, Compaq Tru64 Unix, SGI IRIX, Siemens Reliant Unix, Ubuntu, Zorin OS and others.

In certain embodiments, the subject systems are flow cytometric systems. Suitable flow cytometry systems may include, but are not limited to, those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255. ; Flow cytometry systems of interest include BD Biosciences FACSCanto^{™} flow cytometer, BD Biosciences FACSCanto^{™} II flow cytometer, BD Accuri^{™} flow cytometer, BD Accuri^{™} C6 Plus flow cytometer, BD Biosciences FACSCelesta^{™} flow cytometer, BD Biosciences FACSLyric^{™} flow cytometer, BD Biosciences FACSVerse^{™} flow cytometer, BD Biosciences FACSymphony^{™} flow cytometer, BD Biosciences LSRFortessa^{™} flow cytometer, BD Biosciences LSRFortessa^{™} X-20 flow cytometer, BD Biosciences FACSPresto^{™} flow cytometer, BD Biosciences FACSVia^{™} flow cytometer and BD Biosciences FACSCalibur^{™} cell sorter, a BD Biosciences FACSCount^{™} cell sorter, BD Biosciences FACSLyric^{™} cell sorter, BD Biosciences Via^{™} cell sorter, BD Biosciences Influx^{™} cell sorter, BD Biosciences Jazz^{™} cell sorter, BD Biosciences Aria^{™} cell sorter, BD Biosciences FACSAria^{™} II cell sorter, BD Biosciences FACSAria^{™} III cell sorter, BD Biosciences FACSAria^{™} Fusion cell sorter and BD Biosciences FACSMelody^{™} cell sorter, BD Biosciences FACSymphony^{™} S6 cell sorter or the like.

In some embodiments, the subject systems are flow cytometric systems, such those described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766.

In some embodiments, the subject systems are particle sorting systems that are configured to sort particles with an enclosed particle sorting module, such as those described in U.S. Patent Publication No. 2017/0299493. In certain embodiments, particles (e.g., cells) of the sample are sorted using a sort decision module having a plurality of sort decision units, such as those described in U.S. Patent Publication No. 2020/0256781. In some embodiments, the subject systems include a particle sorting module having deflector plates, such as described in U.S. Patent Publication No. 2017/0299493, filed on March 28, 2017.

In certain instances, flow cytometry systems of the invention are configured for imaging particles in a flow stream by fluorescence imaging using radiofrequency tagged emission (FIRE), such as those described in Diebold, et al. Nature Photonics Vol. 7(10); 806-810 (2013) as well as described in U.S. Patent Nos. 9,423,353; 9,784,661; 9,983,132; 10,006,852; 10,078,045; 10,036,699; 10,222,316; 10,288,546; 10,324,019; 10,408,758; 10,451,538; 10,620,111; and U.S. Patent Publication Nos. 2017/0133857; 2017/0328826; 2017/0350803; 2018/0275042; 2019/0376895 and 2019/0376894.

In certain embodiments, the subject systems are configured to sort one or more of the particles (e.g., cells) of the sample that are identified based on the estimated abundance of the fluorophores associated with the particle as described above. The term "sorting" is used herein in its conventional sense to refer to separating components (e.g., cells, non-cellular particles such as biological macromolecules) of the sample and in some instances delivering the separated components to one or more sample collection containers. For example, the subject systems may be configured for sorting samples having 2 or more components, such as 3 or more components, such as 4 or more components, such as 5 or more components, such as 10 or more components, such as 15 or more components and including soring a sample having 25 or more components. One or more of the sample components may be separated from the sample and delivered to a sample collection container, such as 2 or more sample components, such as 3 or more sample components, such as 4 or more sample components, such as 5 or more sample components, such as 10 or more sample components and including 15 or more sample components may be separated from the sample and delivered to a sample collection container.

In some embodiments, particle sorting systems of interest are configured to sort particles with an enclosed particle sorting module, such as those described in U.S. Patent Publication No. 2017/0299493, filed on March 28, 2017. In certain embodiments, particles (e.g., cells) of the sample are sorted using a sort decision module having a plurality of sort decision units, such as those described in U.S. Patent Publication No. 2020/0256781. In some embodiments, the subject systems include a particle sorting module having deflector plates, such as described in U.S. Patent Publication No. 2017/0299493, filed on March 28, 2017.

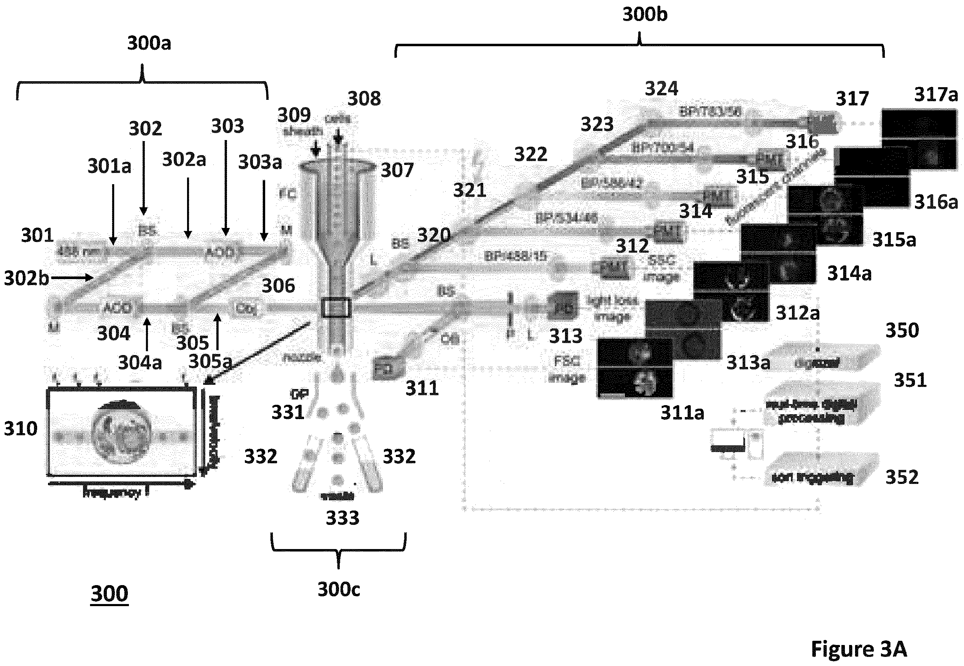

In certain embodiments, systems are a fluorescence imaging using radiofrequency tagged emission image-enabled particle sorter, such as depicted in FIG. 3A. Particle sorter 300 includes a light irradiation component 300a which includes light source 301 (e.g., 488 nm laser) which generates output beam of light 301a that is split with beamsplitter 302 into beams 302a and 302b. Light beam 302a is propagated through acousto-optic device (e.g., an acousto-optic deflector, AOD) 303 to generate an output beam 303a having one or more angularly deflected beams of light. In some instances, output beam 303a generated from acousto-optic device 303 includes a local oscillator beam and a plurality of radiofrequency comb beams. Light beam 302b is propagated through acousto-optic device (e.g., an acousto-optic deflector, AOD) 304 to generate an output beam 304a having one or more angularly deflected beams of light. In some instances, output beam 304a generated from acousto-optic device 304 includes a local oscillator beam and a plurality of radiofrequency comb beams. Output beams 303a and 304a generated from acousto-optic devices 303 and 304, respectively are combined with beamsplitter 305 to generate output beam 305a which is conveyed through an optical component 306 (e.g., an objective lens) to irradiate particles in flow cell 307. In certain embodiments, acousto-optic device 303 (AOD) splits a single laser beam into an array of beamlets, each having different optical frequency and angle. Second AOD 304 tunes the optical frequency of a reference beam, which is then overlapped with the array of beamlets at beam combiner 305. In certain embodiments, the light irradiation system having a light source and acousto-optic device can also include those described in Schraivogel, et al. ("High-speed fluorescence image-enabled cell sorting" Science (2022), 375 (6578): 315-320) and United States Patent Publication No. 2021/0404943.

Output beam 305a irradiates sample particles 308 propagating through flow cell 307 (e.g., with sheath fluid 309) at irradiation region 310. As shown in irradiation region 310, a plurality of beams (e.g., angularly deflected radiofrequency shifted beams of light depicted as dots across irradiation region 310) overlaps with a reference local oscillator beam (depicted as the shaded line across irradiation region 310). Due to their differing optical frequencies, the overlapping beams exhibit a beating behavior, which causes each beamlet to carry a sinusoidal modulation at a distinct frequency f₁₋ₙ.

Light from the irradiated sample is conveyed to light detection system 300b that includes a plurality of photodetectors. Light detection system 300b includes forward scattered light photodetector 311 for generating forward scatter images 311a and a side scattered light photodetector 312 for generating side scatter images 312a. Light detection system 300b also includes brightfield photodetector 313 for generating light loss images 313a. In some embodiments, forward scatter detector 311 and side scatter detector 312 are photodiodes (e.g., avalanche photodiodes, APDs). In some instances, brightfield photodetector 313 is a photomultiplier tube (PMT). Fluorescence from the irradiated sample is also detected with fluorescence photodetectors 314-317. In some instances, photodetectors 314-317 are photomultiplier tubes. Light from the irradiated sample is directed to the side scatter detection channel 312 and fluorescence detection channels 314-317 through beamsplitter 320. Light detection system 300b includes bandpass optical components 321, 322, 323 and 324 (e.g., dichroic mirrors) for propagating predetermined wavelength of light to photodetectors 314-317. In some instances, optical component 321 is a 534 nm/40 nm bandpass. In some instances, optical component 322 is a 586 nm/42 nm bandpass. In some instances, optical component 323 is a 700 nm/54 nm bandpass. In some instances, optical component 324 is a 783 nm/56 nm bandpass. The first number represents the center of a spectral band. The second number provides a range of the spectral band. Thus, a 510/20 filter extends 10 nm on each side of the center of the spectral band, or from 500 nm to 520 nm.

Data signals generated in response to light detected in scattered light detection channels 311 and 312, brightfield light detection channel 313 and fluorescence detection channels 314-317 are processed by real-time digital processing with processors 350 and 351. Images 311a-317a can be generated in each light detection channel based on the data signals generated in processors 350 and 351. Image-enabled sorting is performed in response to a sort signal generated in sort trigger 352. Sorting component 300c includes deflection plates 331 for deflecting particles into sample containers 332 or to waste stream 333. In some instances, sort component 300c is configured to sort particles with an enclosed particle sorting module, such as those described in U.S. Patent Publication No. 2017/0299493, filed on March 28, 2017. In certain embodiments, sorting component 300c includes a sort decision module having a plurality of sort decision units, such as those described in U.S. Patent Publication No. 2020/0256781.

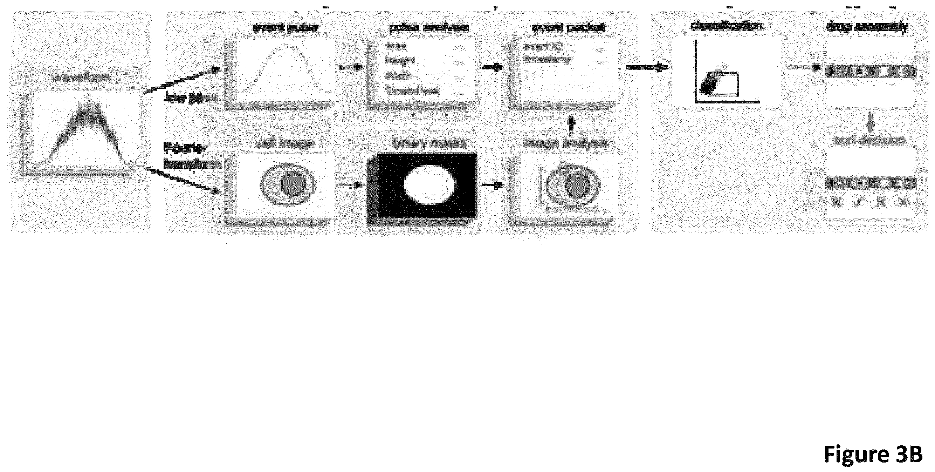

Figure 3B depicts image-enabled particle sorting data processing according to certain embodiments. In some instances, image-enabled particle sorting data processing is a low-latency data processing pipeline. Each photodetector produces a pulse with high-frequency modulations encoding the image (waveform). Fourier analysis is performed to reconstruct the image from the modulated pulse. An image processing pipeline produces a set of image features (image analysis), which are combined with features derived from a pulse processing pipeline (event packet). Real-time sort classification electronics then classify the particle based on image features, producing a sort decision that is used to selectively charge the droplets.

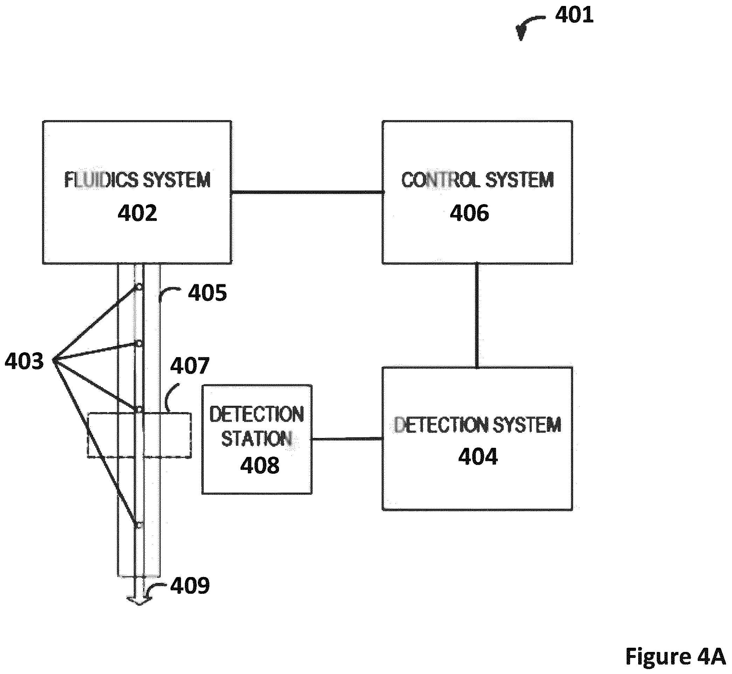

In some embodiments, systems are particle analyzers where the particle analysis system 401 (FIG. 4A) can be used to analyze and characterize particles, with or without physically sorting the particles into collection vessels. FIG. 4A shows a functional block diagram of a particle analysis system for computational based sample analysis and particle characterization. In some embodiments, the particle analysis system 401 is a flow system. The particle analysis system 401 shown in FIG. 4A can be configured to perform, in whole or in part, the methods described herein such as. The particle analysis system 401 includes a fluidics system 402. The fluidics system 402 can include or be coupled with a sample tube 405 and a moving fluid column within the sample tube in which particles 403 (e.g. cells) of a sample move along a common sample path 409.

The particle analysis system 401 includes a detection system 404 configured to collect a signal from each particle as it passes one or more detection stations along the common sample path. A detection station 408 generally refers to a monitored area 407 of the common sample path. Detection can, in some implementations, include detecting light or one or more other properties of the particles 403 as they pass through a monitored area 407. In FIG. 4A, one detection station 408 with one monitored area 407 is shown. Some implementations of the particle analysis system 401 can include multiple detection stations. Furthermore, some detection stations can monitor more than one area.

Each signal is assigned a signal value to form a data point for each particle. As described above, this data can be referred to as event data. The data point can be a multidimensional data point including values for respective properties measured for a particle. The detection system 404 is configured to collect a succession of such data points in a first-time interval.

The particle analysis system 401 can also include a control system 306. The control system 406 can include one or more processors, an amplitude control circuit and/or a frequency control circuit. The control system shown can be operationally associated with the fluidics system 402. The control system can be configured to generate a calculated signal frequency for at least a portion of the first-time interval based on a Poisson distribution and the number of data points collected by the detection system 404 during the first time interval. The control system 406 can be further configured to generate an experimental signal frequency based on the number of data points in the portion of the first time interval. The control system 406 can additionally compare the experimental signal frequency with that of a calculated signal frequency or a predetermined signal frequency.

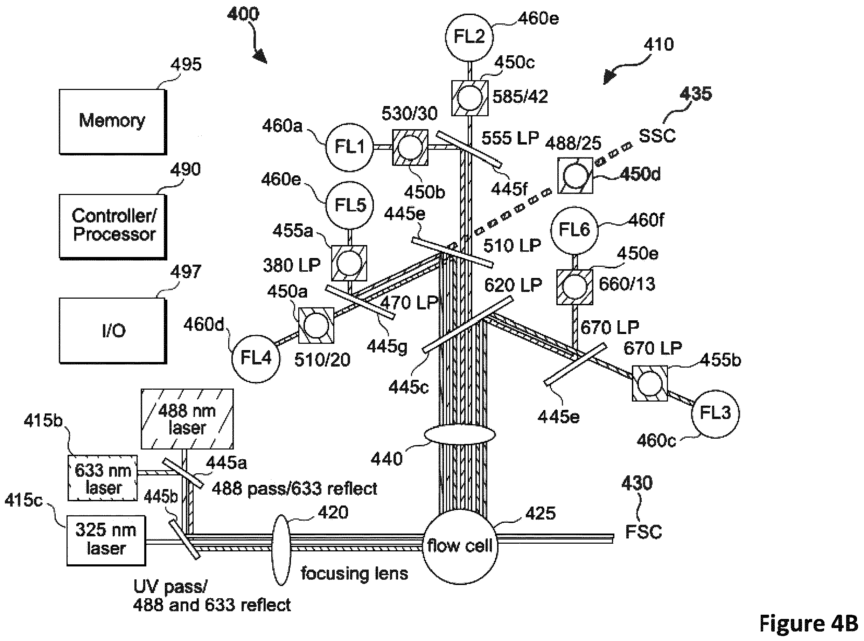

FIG. 4B shows a system 400 for flow cytometry in accordance with an illustrative embodiment of the present invention. The system 400 includes a flow cytometer 410, a controller/processor 490 and a memory 495. The flow cytometer 410 includes one or more excitation lasers 415a-415c, a focusing lens 420, a flow chamber 425, a forward scatter detector 430, a side scatter detector 435, a fluorescence collection lens 440, one or more beam splitters 445a-445g, one or more bandpass filters 450a-450e, one or more longpass ("LP") filters 455a-455b, and one or more fluorescent detectors 460a-460f.

The excitation lasers 115a-c emit light in the form of a laser beam. The wavelengths of the laser beams emitted from excitation lasers 415a-415c are 488 nm, 633 nm, and 325 nm, respectively, in the example system of FIG. 4B. The laser beams are first directed through one or more of beam splitters 445a and 445b. Beam splitter 445a transmits light at 488 nm and reflects light at 633 nm. Beam splitter 445b transmits UV light (light with a wavelength in the range of 10 to 400 nm) and reflects light at 488 nm and 633 nm.

The laser beams are then directed to a focusing lens 420, which focuses the beams onto the portion of a fluid stream where particles of a sample are located, within the flow chamber 425. The flow chamber is part of a fluidics system which directs particles, typically one at a time, in a stream to the focused laser beam for interrogation. The flow chamber can comprise a flow cell in a benchtop cytometer or a nozzle tip in a stream-in-air cytometer.

The light from the laser beam(s) interacts with the particles in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. The fluorescence emissions as well as the diffracted light, refracted light, reflected light, and scattered light may be routed to one or more of the forward scatter detector 430, the side scatter detector 435, and the one or more fluorescent detectors 460a-460f through one or more of the beam splitters 445a-445g, the bandpass filters 450a-450e, the longpass filters 455a-455b, and the fluorescence collection lens 440.

The fluorescence collection lens 440 collects light emitted from the particle- laser beam interaction and routes that light towards one or more beam splitters and filters. Bandpass filters, such as bandpass filters 450a-450e, allow a narrow range of wavelengths to pass through the filter. For example, bandpass filter 450a is a 510/20 filter. The first number represents the center of a spectral band. The second number provides a range of the spectral band. Thus, a 510/20 filter extends 10 nm on each side of the center of the spectral band, or from 500 nm to 520 nm. Shortpass filters transmit wavelengths of light equal to or shorter than a specified wavelength. Longpass filters, such as longpass filters 455a-455b, transmit wavelengths of light equal to or longer than a specified wavelength of light. For example, longpass filter 455a, which is a 670 nm longpass filter, transmits light equal to or longer than 670 nm. Filters are often selected to optimize the specificity of a detector for a particular fluorescent dye. The filters can be configured so that the spectral band of light transmitted to the detector is close to the emission peak of a fluorescent dye.

Beam splitters direct light of different wavelengths in different directions. Beam splitters can be characterized by filter properties such as shortpass and longpass. For example, beam splitter 445g is a 620 SP beam splitter, meaning that the beam splitter 445g transmits wavelengths of light that are 620 nm or shorter and reflects wavelengths of light that are longer than 620 nm in a different direction. In one embodiment, the beam splitters 445a-445g can comprise optical mirrors, such as dichroic mirrors.

The forward scatter detector 430 is positioned slightly off axis from the direct beam through the flow cell and is configured to detect diffracted light, the excitation light that travels through or around the particle in mostly a forward direction. The intensity of the light detected by the forward scatter detector is dependent on the overall size of the particle. The forward scatter detector can include a photodiode. The side scatter detector 435 is configured to detect refracted and reflected light from the surfaces and internal structures of the particle, and tends to increase with increasing particle complexity of structure. The fluorescence emissions from fluorescent molecules associated with the particle can be detected by the one or more fluorescent detectors 460a-460f. The side scatter detector 435 and fluorescent detectors can include photomultiplier tubes. The signals detected at the forward scatter detector 430, the side scatter detector 435 and the fluorescent detectors can be converted to electronic signals (voltages) by the detectors. This data can provide information about the sample.

One of skill in the art will recognize that a flow cytometer in accordance with an embodiment of the present invention is not limited to the flow cytometer depicted in FIG. 4B, but can include any flow cytometer known in the art. For example, a flow cytometer may have any number of lasers, beam splitters, filters, and detectors at various wavelengths and in various different configurations.

In operation, cytometer operation is controlled by a controller/processor 490, and the measurement data from the detectors can be stored in the memory 495 and processed by the controller/processor 490. Although not shown explicitly, the controller/processor 190 is coupled to the detectors to receive the output signals therefrom, and may also be coupled to electrical and electromechanical components of the flow cytometer 400 to control the lasers, fluid flow parameters, and the like. Input/output (I/O) capabilities 497 may be provided also in the system. The memory 495, controller/processor 490, and I/O 497 may be entirely provided as an integral part of the flow cytometer 410. In such an embodiment, a display may also form part of the I/O capabilities 497 for presenting experimental data to users of the cytometer 400. Alternatively, some or all of the memory 495 and controller/processor 490 and I/O capabilities may be part of one or more external devices such as a general purpose computer. In some embodiments, some or all of the memory 495 and controller/processor 490 can be in wireless or wired communication with the cytometer 410. The controller/processor 490 in conjunction with the memory 495 and the I/O 497 can be configured to perform various functions related to the preparation and analysis of a flow cytometer experiment.

The system illustrated in FIG. 4B includes six different detectors that detect fluorescent light in six different wavelength bands (which may be referred to herein as a "filter window" for a given detector) as defined by the configuration of filters and/or splitters in the beam path from the flow cell 425 to each detector. Different fluorescent molecules used for a flow cytometer experiment will emit light in their own characteristic wavelength bands. The particular fluorescent labels used for an experiment and their associated fluorescent emission bands may be selected to generally coincide with the filter windows of the detectors. However, as more detectors are provided, and more labels are utilized, perfect correspondence between filter windows and fluorescent emission spectra is not possible. It is generally true that although the peak of the emission spectra of a particular fluorescent molecule may lie within the filter window of one particular detector, some of the emission spectra of that label will also overlap the filter windows of one or more other detectors. This may be referred to as spillover. The I/O 497 can be configured to receive data regarding a flow cytometer experiment having a panel of fluorescent labels and a plurality of cell populations having a plurality of markers, each cell population having a subset of the plurality of markers. The I/O 497 can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory 495. The controller/processor 490 can be configured to evaluate one or more assignments of labels to markers.

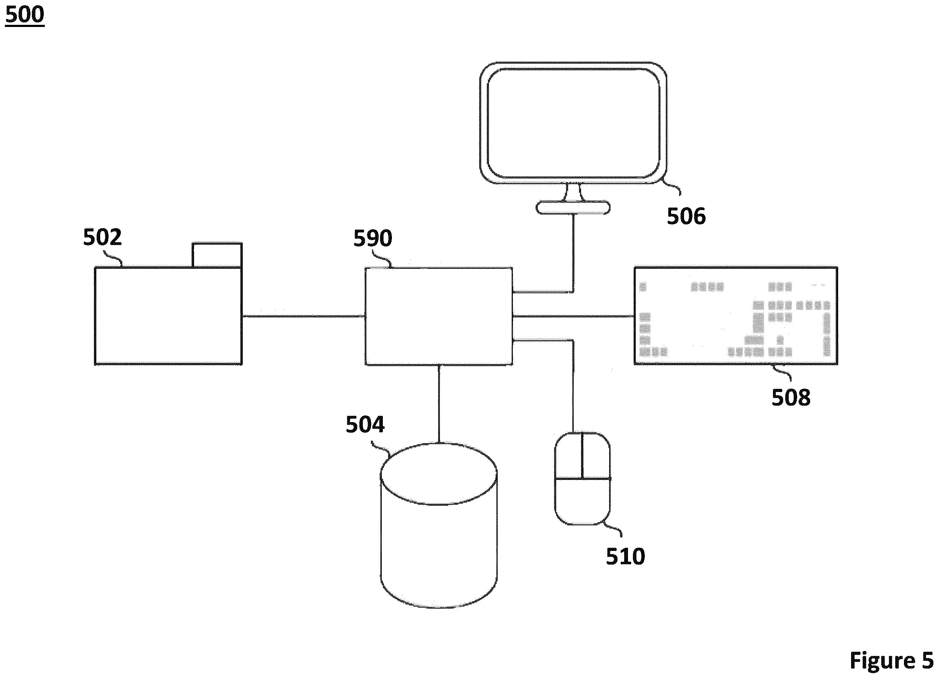

FIG. 5 shows a functional block diagram for one example of a particle analyzer control system, such as an analytics controller 500, for analyzing and displaying biological events. An analytics controller 500 can be configured to implement a variety of processes for controlling graphic display of biological events.

A particle analyzer or sorting system 502 can be configured to acquire biological event data. For example, a flow cytometer can generate flow cytometric event data. The particle analyzer 502 can be configured to provide biological event data to the analytics controller 500. A data communication channel can be included between the particle analyzer or sorting system 502 and the analytics controller 500. The biological event data can be provided to the analytics controller 500 via the data communication channel.

The analytics controller 500 can be configured to receive biological event data from the particle analyzer or sorting system 502. The biological event data received from the particle analyzer or sorting system 502 can include flow cytometric event data. The analytics controller 500 can be configured to provide a graphical display including a first plot of biological event data to a display device 506. The analytics controller 500 can be further configured to render a region of interest as a gate around a population of biological event data shown by the display device 506, overlaid upon the first plot, for example. In some embodiments, the gate can be a logical combination of one or more graphical regions of interest drawn upon a single parameter histogram or bivariate plot. In some embodiments, the display can be used to display particle parameters or saturated detector data.

The analytics controller 500 can be further configured to display the biological event data on the display device 506 within the gate differently from other events in the biological event data outside of the gate. For example, the analytics controller 500 can be configured to render the color of biological event data contained within the gate to be distinct from the color of biological event data outside of the gate. The display device 506 can be implemented as a monitor, a tablet computer, a smartphone, or other electronic device configured to present graphical interfaces.

The analytics controller 500 can be configured to receive a gate selection signal identifying the gate from a first input device. For example, the first input device can be implemented as a mouse 510. The mouse 510 can initiate a gate selection signal to the analytics controller 500 identifying the gate to be displayed on or manipulated via the display device 506 (e.g., by clicking on or in the desired gate when the cursor is positioned there). In some implementations, the first device can be implemented as the keyboard 508 or other means for providing an input signal to the analytics controller 500 such as a touchscreen, a stylus, an optical detector, or a voice recognition system. Some input devices can include multiple inputting functions. In such implementations, the inputting functions can each be considered an input device. For example, as shown in FIG. 5, the mouse 510 can include a right mouse button and a left mouse button, each of which can generate a triggering event.

The triggering event can cause the analytics controller 500 to alter the manner in which the data is displayed, which portions of the data is actually displayed on the display device 506, and/or provide input to further processing such as selection of a population of interest for particle sorting.

In some embodiments, the analytics controller 500 can be configured to detect when gate selection is initiated by the mouse 510. The analytics controller 500 can be further configured to automatically modify plot visualization to facilitate the gating process. The modification can be based on the specific distribution of biological event data received by the analytics controller 500.

The analytics controller 500 can be connected to a storage device 504. The storage device 504 can be configured to receive and store biological event data from the analytics controller 500. The storage device 504 can also be configured to receive and store flow cytometric event data from the analytics controller 500. The storage device 504 can be further configured to allow retrieval of biological event data, such as flow cytometric event data, by the analytics controller 500.

A display device 506 can be configured to receive display data from the analytics controller 500. The display data can comprise plots of biological event data and gates outlining sections of the plots. The display device 506 can be further configured to alter the information presented according to input received from the analytics controller 500 in conjunction with input from the particle analyzer 502, the storage device 504, the keyboard 508, and/or the mouse 510.

In some implementations, the analytics controller 500 can generate a user interface to receive example events for sorting. For example, the user interface can include a control for receiving example events or example images. The example events or images or an example gate can be provided prior to collection of event data for a sample, or based on an initial set of events for a portion of the sample.

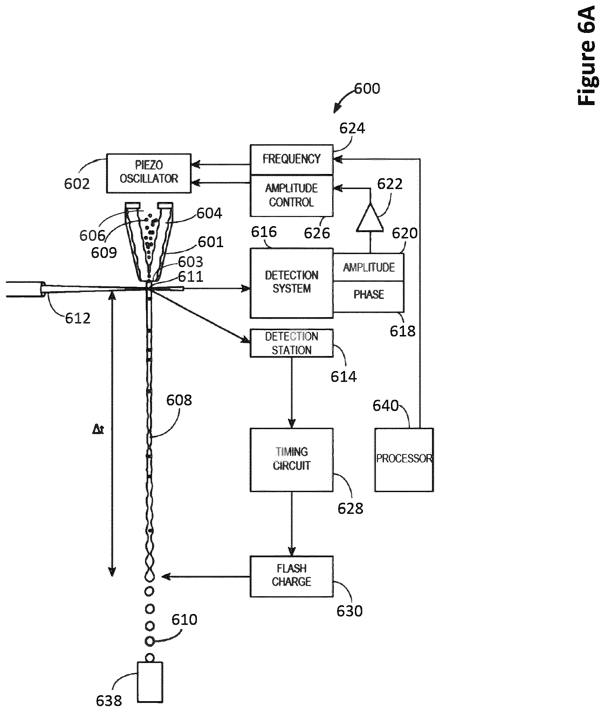

FIG. 6A is a schematic drawing of a particle sorter system 600 (e.g., the particle analyzer or sorting system 502) in accordance with one embodiment presented herein. In some embodiments, the particle sorter system 600 is a cell sorter system. As shown in FIG. 6A, a drop formation transducer 602 (e.g., piezo-oscillator) is coupled to a fluid conduit 601, which can be coupled to, can include, or can be, a nozzle 603. Within the fluid conduit 601, sheath fluid 604 hydrodynamically focuses a sample fluid 606 comprising particles 609 into a moving fluid column 608 (e.g., a stream). Within the moving fluid column 608, particles 609 (e.g., cells) are lined up in single file to cross a monitored area 611 (e.g., where laser-stream intersect), irradiated by an irradiation source 612 (e.g., a laser). Vibration of the drop formation transducer 602 causes moving fluid column 608 to break into a plurality of drops 610, some of which contain particles 609.

In operation, a detection station 614 (e.g., an event detector) identifies when a particle of interest (or cell of interest) crosses the monitored area 611. Detection station 614 feeds into a timing circuit 628, which in turn feeds into a flash charge circuit 630. At a drop break off point, informed by a timed drop delay (Δt), a flash charge can be applied to the moving fluid column 608 such that a drop of interest carries a charge. The drop of interest can include one or more particles or cells to be sorted. The charged drop can then be sorted by activating deflection plates (not shown) to deflect the drop into a vessel such as a collection tube or a multi- well or microwell sample plate where a well or microwell can be associated with drops of particular interest. As shown in FIG. 6A, the drops can be collected in a drain receptacle 638.

A detection system 616 (e.g., a drop boundary detector) serves to automatically determine the phase of a drop drive signal when a particle of interest passes the monitored area 611. An exemplary drop boundary detector is described in U.S. Pat. No. 7,679,039. The detection system 616 allows the instrument to accurately calculate the place of each detected particle in a drop. The detection system 616 can feed into an amplitude signal 620 and/or phase 618 signal, which in turn feeds (via amplifier 622) into an amplitude control circuit 626 and/or frequency control circuit 624. The amplitude control circuit 626 and/or frequency control circuit 624, in turn, controls the drop formation transducer 602. The amplitude control circuit 626 and/or frequency control circuit 624 can be included in a control system.

In some implementations, sort electronics (e.g., the detection system 616, the detection station 614 and a processor 640) can be coupled with a memory configured to store the detected events and a sort decision based thereon. The sort decision can be included in the event data for a particle. In some implementations, the detection system 616 and the detection station 614 can be implemented as a single detection unit or communicatively coupled such that an event measurement can be collected by one of the detection system 616 or the detection station 614 and provided to the non-collecting element.

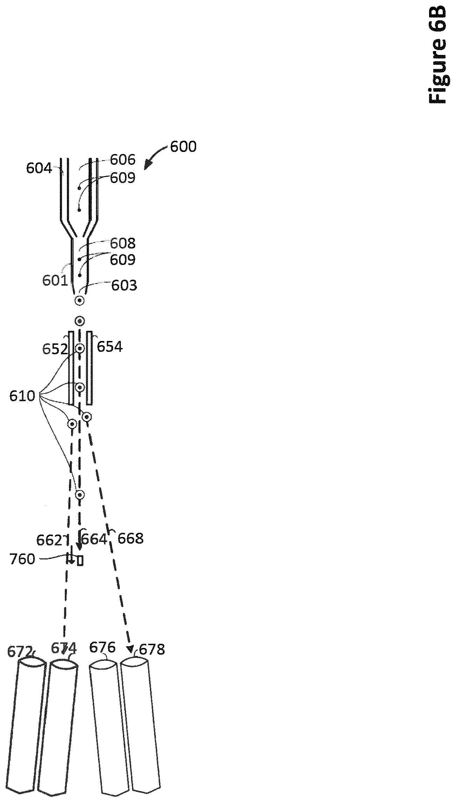

FIG. 6B is a schematic drawing of a particle sorter system, in accordance with one embodiment presented herein. The particle sorter system 600 shown in FIG. 6B, includes deflection plates 652 and 654. A charge can be applied via a stream-charging wire in a barb. This creates a stream of droplets 610 containing particles 610 for analysis. The particles can be illuminated with one or more light sources (e.g., lasers) to generate light scatter and fluorescence information. The information for a particle is analyzed such as by sorting electronics or other detection system (not shown in FIG. 6B). The deflection plates 652 and 654 can be independently controlled to attract or repel the charged droplet to guide the droplet toward a destination collection receptacle (e.g., one of 672, 674, 676, or 678). As shown in FIG. 6B, the deflection plates 652 and 654 can be controlled to direct a particle along a first path 662 toward the receptacle 674 or along a second path 668 toward the receptacle 678. If the particle is not of interest (e.g., does not exhibit scatter or illumination information within a specified sort range), deflection plates may allow the particle to continue along a flow path 664. Such uncharged droplets may pass into a waste receptacle such as via aspirator 670.

The sorting electronics can be included to initiate collection of measurements, receive fluorescence signals for particles, and determine how to adjust the deflection plates to cause sorting of the particles. Example implementations of the embodiment shown in FIG. 6B include the BD FACSAria^{™} line of flow cytometers commercially provided by Becton, Dickinson and Company (Franklin Lakes, NJ).

### NON-TRANSITORY COMPUTER-READABLE STORAGE MEDIUM

Aspects of the present disclosure further include non-transitory computer readable storage mediums having instructions for practicing the subject methods. Computer readable storage mediums may be employed on one or more computers for complete automation or partial automation of a system for practicing methods described herein. In certain embodiments, instructions in accordance with the method described herein can be coded onto a computer-readable medium in the form of "programming", where the term "computer readable medium" as used herein refers to any non-transitory storage medium that participates in providing instructions and data to a computer for execution and processing. Examples of suitable non-transitory storage media include a floppy disk, hard disk, optical disk, magneto-optical disk, CD-ROM, CD-R, magnetic tape, non-volatile memory card, ROM, DVD-ROM, Blue-ray disk, solid state disk, and network attached storage (NAS), whether or not such devices are internal or external to the computer. A file containing information can be "stored" on computer readable medium, where "storing" means recording information such that it is accessible and retrievable at a later date by a computer. The computer-implemented method described herein can be executed using programming that can be written in one or more of any number of computer programming languages. Such languages include, for example, Python, Java, Java Script, C, C#, C++, Go, R, Swift, PHP, as well as any many others.

Non-transitory computer readable storage medium according to certain embodiments have instructions for inputting into a machine learning algorithm one or more training data sets having a plurality of images of particles and quantified parameters of a plurality of image filters, instructions for generating a dynamic particle classification algorithm based on the training data sets and the quantified parameters of the image filters and instructions for calculating an adjustment to one or more of the quantified parameters of the image filters.

In some embodiments, non-transitory computer readable storage medium include instructions for detecting light from particles in a plurality of photodetector channels. In some instances, each training data set includes one or more unfiltered images of particles. In some embodiments, each training data set includes one or more ground-truth images of particles. In certain embodiments, the machine learning algorithm employed is a neural network. In some instances, the a machine learning algorithm is selected from an artificial neural network, a convolutional neural network or a recurrent neural network.

In some embodiments, non-transitory computer readable storage medium include instructions for quantifying the image filters in a plurality of photodetector channels. In some instances, non-transitory computer readable storage medium include instructions for the image filters in one or more fluorescence photodetector channels. In some instances, non-transitory computer readable storage medium include instructions for quantifying the parameters of the image filters for at least a plurality of the photodetector channels. In certain instances, non-transitory computer readable storage medium include instructions for quantifying the parameters of the image filters for all of the photodetector channels.

In some embodiments, non-transitory computer readable storage medium include instructions for quantifying whether a photodetector channel is enabled or not enabled. In some instances, non-transitory computer readable storage medium include instructions for quantifying a photodetector channel as being enabled as a 1 and a photodetector channel as being not enabled as a 0. In certain instances, non-transitory computer readable storage medium include instructions for designating a photodetector channel as being enabled or not enabled before quantifying each subsequent parameter of the image filters.

In some embodiments, non-transitory computer readable storage medium include instructions to select from a plurality of image filter parameters, such as a smooth image filter parameter, a sharpen image filter parameter, a blur image filter parameter, a threshold image filter parameter, a gamma correction image filter parameter, an edge image filter parameter, an invert image filter parameter and an intensity image filter parameter. In some embodiments, non-transitory computer readable storage medium include instructions to quantify the image filter parameter as binary, such as being designated as a 1 or as a 0. In some instances, non-transitory computer readable storage medium include instructions to quantify the image filter parameter to be an integer within a predetermined range, such as from 0 to 2, such as from 0 to 5, such as from 0 to 8, such as from 0 to 10, such as from 0 to 20, such as from 0 to 25, such as from 0 to 50, such as from 0 to 100. In some instances, non-transitory computer readable storage medium include instructions for quantifying the image filter smooth parameter as a 1 or as a 0. In some instances, non-transitory computer readable storage medium include instructions for quantifying the sharpen parameter as a 1 or as a 0. In some instances, the memory includes instructions for quantifying the edges parameter as a 1 or as a 0. In some instances, non-transitory computer readable storage medium include instructions for quantifying the image filter gamma correction parameter from 0 to 2. In some instances, non-transitory computer readable storage medium include instructions for quantifying the image filter blur parameter from 0 to 8. In some instances, non-transitory computer readable storage medium include instructions for quantifying the image filter threshold parameter from 0 to 100. In some instances, non-transitory computer readable storage medium include instructions for quantifying the image filter intensity parameter from 0 to 100.

In some embodiments, non-transitory computer readable storage medium include instructions for inputting the quantified parameters of the image filters into the machine learning algorithm in a predetermined order. In some instances, non-transitory computer readable storage medium include instructions for inputting the quantified parameters of the image filters into the machine learning algorithm in the order of: 1) enabled; 2) smooth; 3) sharpen; 4) blur; 5) threshold; 6) gamma correction; 7) edges; 8) invert and 9) intensity.

In embodiments, non-transitory computer readable storage medium include instructions for calculating an adjustment to one or more of the quantified parameters of the image filters. In some embodiments, non-transitory computer readable storage medium include instructions for determining accuracy and loss statistics of the generated dynamic particle classification algorithm. In some instances, non-transitory computer readable storage medium include instructions for calculating the accuracy and loss statistics of the dynamic particle classification algorithm by an iterative optimization approach. In certain instances, the iterative optimization approach is a first-order optimization algorithm. In some instances, non-transitory computer readable storage medium include instructions for calculating the accuracy and loss statistics of the dynamic particle classification algorithm by a gradient descent algorithm. In certain instances, non-transitory computer readable storage medium include instructions for calculating the accuracy and loss statistics of the dynamic particle classification algorithm by backpropagation. In some embodiments, non-transitory computer readable storage medium include instructions for adjusting one or more of the image filters based on the calculated accuracy and loss statistics. In some instances, non-transitory computer readable storage medium include instructions to iteratively adjust each one of the image filters in each photodetector channel to converge on an optimized set of image filters for the dynamic particle classification algorithm. In certain instances, non-transitory computer readable storage medium include instructions for applying the adjusted image filters to a plurality of single cell images generated for cells in a flow stream (e.g., in a flow stream of a flow cytometer).

The non-transitory computer readable storage medium may be employed on one or more computer systems having a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as those mentioned above, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques.

### KITS

Aspects of the present disclosure further include kits, where kits include one or more of the non-transitory computer readable storage medium described herein. In some embodiments, kits may further include programming for the subject systems, such as in the form of a computer readable medium (e.g., flash drive, USB storage, compact disk, DVD, Blu-ray disk, etc.) or instructions for downloading the programming from an internet web protocol or cloud server. Kits may further include instructions for practicing the subject methods. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, and the like. Yet another form of these instructions is a computer readable medium, e.g., diskette, compact disk (CD), portable flash drive, and the like, on which the information has been recorded. Yet another form of these instructions that may be present is a website address which may be used via the internet to access the information at a removed site.

### UTILITY

The subject methods, systems and computer systems find use in a variety of applications where it is desirable to analyze and sort particle components in a sample in a fluid medium, such as a biological sample. In some embodiments, the systems and methods described herein find use in flow cytometry characterization of biological samples labelled with fluorescent tags. In other embodiments, the systems and methods find use in spectroscopy of emitted light. In addition, the subject methods and system find use in increasing the precision in identifying and classifying particles of a sample. Embodiments of the present disclosure find use where it is desirable to provide a flow cytometer with improved cell sorting accuracy, enhanced particle collection, particle charging efficiency, more accurate particle charging and enhanced particle deflection during cell sorting.

Embodiments of the present disclosure also find use in applications where cells prepared from a biological sample may be desired for research, laboratory testing or for use in therapy. In some embodiments, the subject methods and devices may facilitate obtaining individual cells prepared from a target fluidic or tissue biological sample. For example, the subject methods and systems facilitate obtaining cells from fluidic or tissue samples to be used as a research or diagnostic specimen for diseases such as cancer. Likewise, the subject methods and systems may facilitate obtaining cells from fluidic or tissue samples to be used in therapy. Methods and devices of the present disclosure allow for separating and collecting cells from a biological sample (e.g., organ, tissue, tissue fragment, fluid) with enhanced efficiency and low cost as compared to traditional flow cytometry systems.

Notwithstanding the appended claims, the disclosure is also defined by the following clauses:
1. A method for determining image filters for classifying particles of a sample in a particle analyzer, the method comprising:
   inputting into a machine learning algorithm one or more training data sets comprising a plurality of images of particles and quantified parameters of a plurality of image filters;
   generating a dynamic particle classification algorithm based on the training data sets and the quantified parameters of the image filters; and
   calculating an adjustment to one or more of the quantified parameters of the image filters.
2. The method according to clause 1, wherein each training data set comprises a plurality of unfiltered images of particles.
3. The method according to any one of clauses 1-2, wherein each training data set comprises a plurality of ground-truth images of particles.
4. The method according to any one of clauses 1-3, wherein the machine learning algorithm comprises a neural network.
5. The method according to clause 4, wherein the neural network is selected from the group consisting of an artificial neural network, a convolutional neural network and a recurrent neural network.
6. The method according to any one of clauses 1-5, wherein the image filters are quantified in a plurality of photodetector channels.
7. The method according to clause 6, wherein the image filters are quantified in one or more fluorescence photodetector channels.
8. The method according to any one of clauses 1-7, wherein for each photodetector channel an enabled image filter is quantified as a 1 and a not-enabled image filter is quantified as a 0.
9. The method according to any one of clauses 1-8, wherein the plurality of image filters comprise one or more image filter parameters selected from: smooth, sharpen, blur, threshold, gamma correction, edges, invert and intensity.
10. The method according to clause 9, wherein the image filter smooth parameter is quantified as a 1 or as a 0.
11. The method according to clause 9, wherein the image filter sharpen parameter is quantified as a 1 or as a 0.
12. The method according to clause 9, wherein the image filter blur parameter is quantified from 0 to 8.
13. The method according to clause 9, wherein the image filter threshold parameter is quantified from 0 to 100.
14. The method according to clause 9, wherein the image filter gamma correction parameter is quantified from 0 to 2.
15. The method according to clause 9, wherein the image filter edges parameter is quantified as a 1 or as a 0.
16. The method according to clause 9, wherein the image filter invert parameter is quantified as a 1 or as a 0.
17. The method according to clause 9, wherein the image filter intensity parameter is quantified from 0 to 100.
18. The method according to any one of clauses 1-17, wherein the quantified parameters of the image filters are inputted into the machine learning algorithm in a predetermined order.
19. The method according to clause 18, wherein the quantified parameters of the image filters are inputted into the machine learning algorithm in the order of: 1) enabled; 2) smooth; 3) sharpen; 4) blur; 5) threshold; 6) gamma correction; 7) edges; 8) invert and 9) intensity.
20. The method according to any one of clauses 1-19, wherein calculating an adjustment to one or more of the quantified parameters of the image filters comprises determining accuracy and loss statistics of the generated dynamic particle classification algorithm.
21. The method according to clause 20, wherein the accuracy and loss statistics of the dynamic particle classification algorithm is calculated by an iterative optimization approach.
22. The method according to clause 21, wherein the iterative optimization approach is a first-order optimization algorithm.
23. The method according to any one of clauses 20-22, wherein the accuracy and loss statistics of the dynamic particle classification algorithm is calculated by a gradient descent algorithm.
24. The method according to clause 20, wherein the accuracy and loss statistics of the dynamic particle classification algorithm is calculated by backpropagation.
25. The method according to any one of clauses 20-24, wherein the method further comprises adjusting one or more of the image filters based on the calculated accuracy and loss statistics.
26. The method according to clause 25, wherein each one of the image filters is iteratively adjusted in each photodetector channel to converge on an optimized set of image filters for the dynamic particle classification algorithm.
27. The method according to any one of clauses 26, wherein the method further comprises applying the determined image filters to a plurality of single cell images generated for cells in a flow stream.
28. The method according to any one of clauses 1-27, wherein the method comprises irradiating the particles of the sample with a light source and detecting light from the particles with a light detection system.
29. The method according to clause 28, wherein the method comprises generating an image of each particle based on the detected light.
30. A system comprising:
   a light source configured to irradiate a sample in a flow stream;
   a light detection system comprising a plurality of photodetectors; and
   a processor comprising memory operably coupled to the processor wherein the memory comprises instructions stored thereon, which when executed by the processor, cause the processor to:
      input into a machine learning algorithm one or more training data sets comprising a plurality of images of particles and quantified parameters of a plurality of image filters;
      generate a dynamic particle classification algorithm based on the training data sets and the quantified parameters of the image filters; and
      calculate an adjustment to one or more of the quantified parameters of the image filters.
31. The system according to clause 30, wherein the light detection system is configured to detect light from particles in the sample in a plurality of photodetector channels.
32. The system according to any one of clauses 30-31, wherein each training data set comprises a plurality of unfiltered images of particles.
33. The system according to any one of clauses 30-32, wherein each training data set comprises a plurality of ground-truth images of particles.
34. The system according to any one of clauses 30-33, wherein the machine learning algorithm comprises a neural network.
35. The system according to clause 34, wherein the neural network is selected from the group consisting of an artificial neural network, a convolutional neural network and a recurrent neural network.
36. The system according to any one of clauses 30-35, wherein the memory comprises instructions for quantifying the image filters in a plurality of photodetector channels.
37. The system according to clause 36, wherein the memory comprises instructions for quantifying the image filters in one or more fluorescence photodetector channels.
38. The system according to any one of clauses 30-37, wherein the memory comprises instructions for quantifying an enabled image filter as a 1 and a not-enabled image filter as a 0.
39. The system according to any one of clauses 30-38, wherein the plurality of image filters comprise one or more image filter parameters selected from: smooth, sharpen, blur, threshold, gamma correction, edges, invert and intensity.
40. The system according to clause 39, wherein the memory comprises instructions for quantifying the image filter smooth parameter as a 1 or as a 0.
41. The system according to clause 39, wherein the memory comprises instructions for quantifying the image filter sharpen parameter as a 1 or as a 0.
42. The system according to clause 39, wherein the memory comprises instructions for quantifying the image filter blur parameter from 0 to 8.
43. The system according to clause 39, wherein the memory comprises instructions for quantifying the image filter threshold parameter from 0 to 100.
44. The system according to clause 39, wherein the memory comprises instructions for quantifying the image filter gamma correction parameter from 0 to 2.
45. The system according to clause 39, wherein the memory comprises instructions for quantifying the image filter edges parameter as a 1 or as a 0.
46. The system according to clause 39, wherein the memory comprises instructions for quantifying the image filter invert parameter as a 1 or as a 0.
47. The system according to clause 39, wherein the memory comprises instructions for quantifying the image filter intensity parameter from 0 to 100.
48. The system according to any one of clauses 30-47, wherein the memory comprises instructions for inputting the quantified parameters of the image filters in a predetermined order.
49. The system according to clause 48, wherein the memory comprises instructions for inputting the quantified parameters of the image filters in the order of: 1) enabled; 2) smooth; 3) sharpen; 4) blur; 5) threshold; 6) gamma correction; 7) edges; 8) invert and 9) intensity.
50. The system according to any one of clauses 30-49, wherein the memory comprises instructions for calculating an adjustment to one or more of the quantified parameters of the image filters by determining accuracy and loss statistics of the generated dynamic particle classification algorithm.
51. The system according to clause 50, wherein memory comprises instructions for calculating the accuracy and loss statistics of the dynamic particle classification algorithm by an iterative optimization approach.
52. The system according to clause 51, wherein the iterative optimization approach is a first-order optimization algorithm.
53. The system according to any one of clauses 50-52, the memory comprises instructions for calculating the accuracy and loss statistics of the dynamic particle classification algorithm by a gradient descent algorithm.
54. The system according to clause 53, wherein the memory comprises instructions for calculating the accuracy and loss statistics of the dynamic particle classification algorithm by backpropagation.
55. The system according to any one of clauses 50-54, wherein memory comprises instructions for adjusting one or more of the image filters based on calculated accuracy and loss statistics.
56. The system according to clause 55, wherein the memory comprises instructions for iteratively adjusting each one of the image filters in each photodetector channel to converge on an optimized set of image filters for the dynamic particle classification algorithm.
57. The system according to clause 56, wherein the memory comprises instructions for applying the determined image filters to a plurality of single cell images generated for cells in a flow stream.
58. The system according to any one of clauses 30-57, wherein the light source comprises one or more lasers.
59. The system according to any one of clauses 30-58, wherein the system comprises a particle analyzer.
60. The system according to clause 59, wherein the particle analyzer is part of a flow cytometer.
61. A non-transitory computer readable storage medium for determining image filters for classifying particles of a sample in a particle analyzer, wherein the non-transitory computer readable storage medium comprises instructions stored thereon for:
   inputting into a machine learning algorithm one or more training data sets comprising a plurality of images of particles and quantified parameters of a plurality of image filters;
   generating a dynamic particle classification algorithm based on the training data sets and the quantified parameters of the image filters; and
   calculating an adjustment to one or more of the quantified parameters of the image filters.
62. The non-transitory computer readable storage medium according to clause 61, wherein each training data set comprises a plurality of unfiltered images of particles.
63. The non-transitory computer readable storage medium according to any one of clauses 61-62, wherein each training data set comprises a plurality of ground-truth images of particles.
64. The non-transitory computer readable storage medium according to any one of clauses 61-63, wherein the machine learning algorithm comprises a neural network.
65. The non-transitory computer readable storage medium according to clause 64, wherein the neural network is selected from the group consisting of an artificial neural network, a convolutional neural network and a recurrent neural network.
66. The non-transitory computer readable storage medium according to any one of clauses 61-65, wherein the non-transitory computer readable storage medium comprises algorithm for quantifying the image filters in a plurality of photodetector channels.
67. The non-transitory computer readable storage medium according to clause 66, wherein the non-transitory computer readable storage medium comprises algorithm for quantifying the image filters in one or more fluorescence photodetector channels.
68. The non-transitory computer readable storage medium according to any one of clauses 61-67, wherein the non-transitory computer readable storage medium comprises algorithm for quantifying an enabled image filter as a 1 and a not-enabled image filter as a 0.
69. The non-transitory computer readable storage medium according to any one of clauses 61-68, wherein the plurality of image filter parameters comprise one or more image filter parameters selected from: smooth, sharpen, blur, threshold, gamma correction, edges, invert and intensity.
70. The non-transitory computer readable storage medium according to clause 69, wherein the non-transitory computer readable storage medium comprises algorithm for quantifying the image filter smooth parameter as a 1 or as a 0.
71. The non-transitory computer readable storage medium according to clause 69, wherein the non-transitory computer readable storage medium comprises algorithm for quantifying the image filter sharpen parameter as a 1 or as a 0.
72. The non-transitory computer readable storage medium according to clause 69, wherein the non-transitory computer readable storage medium comprises algorithm for quantifying the image filter blur parameter from 0 to 8.
73. The non-transitory computer readable storage medium according to clause 69, wherein the non-transitory computer readable storage medium comprises algorithm for quantifying the image filter threshold parameter from 0 to 100.
74. The non-transitory computer readable storage medium according to clause 69, wherein the non-transitory computer readable storage medium comprises algorithm for quantifying the image filter gamma correction parameter from 0 to 2.
75. The non-transitory computer readable storage medium according to clause 69, wherein the non-transitory computer readable storage medium comprises algorithm for quantifying the image filter edges parameter as a 1 or as a 0.
76. The non-transitory computer readable storage medium according to clause 69, wherein the non-transitory computer readable storage medium comprises algorithm for quantifying the image filter invert parameter as a 1 or as a 0.
77. The non-transitory computer readable storage medium according to clause 69, wherein the non-transitory computer readable storage medium comprises algorithm for quantifying the image filter intensity parameter from 0 to 100.
78. The non-transitory computer readable storage medium according to any one of clauses 61-77, wherein the non-transitory computer readable storage medium comprises algorithm for inputting the quantified parameters of the image filters into the machine learning algorithm in a predetermined order.
79. The non-transitory computer readable storage medium according to clause 78, wherein the non-transitory computer readable storage medium comprises algorithm for inputting the quantified parameters of the image filters into the machine learning algorithm in the order of: 1) enabled; 2) smooth; 3) sharpen; 4) blur; 5) threshold; 6) gamma correction; 7) edges; 8) invert and 9) intensity.
80. The non-transitory computer readable storage medium according to any one of clauses 61-79, wherein the non-transitory computer readable storage medium comprises algorithm for calculating an adjustment to one or more of the quantified parameters of the image filters by determining accuracy and loss statistics of the generated dynamic particle classification algorithm.
81. The non-transitory computer readable storage medium according to clause 80, wherein the non-transitory computer readable storage medium comprises algorithm for calculating the accuracy and loss statistics of the dynamic particle classification algorithm by an iterative optimization approach.
82. The non-transitory computer readable storage medium according to clause 81, wherein the iterative optimization approach is a first-order optimization algorithm.
83. The non-transitory computer readable storage medium according to any one of clauses 80-82, wherein the non-transitory computer readable storage medium comprises algorithm for calculating the accuracy and loss statistics of the dynamic particle classification algorithm by a gradient descent algorithm.
84. The non-transitory computer readable storage medium according to clause 80, wherein the non-transitory computer readable storage medium comprises algorithm for calculating the accuracy and loss statistics of the dynamic particle classification algorithm by backpropagation.
85. The non-transitory computer readable storage medium according to any one of clauses 80-84, wherein the non-transitory computer readable storage medium comprises algorithm for adjusting one or more of the image filters based on calculated accuracy and loss statistics.
86. The non-transitory computer readable storage medium according to clause 85, wherein the non-transitory computer readable storage medium comprises algorithm for iteratively adjusting each one of the image filters in each photodetector channel to converge on an optimized set of image filters for the dynamic particle classification algorithm.
87. The non-transitory computer readable storage medium according to clause 86, wherein the non-transitory computer readable storage medium comprises algorithm for applying the determined image filters to a plurality of single cell images generated for cells in a flow stream.

Although the foregoing invention has been described in some detail by way of illustration and example for purposes of clarity of understanding, it is readily apparent to those of ordinary skill in the art in light of the teachings of this invention that certain changes and modifications may be made thereto without departing from the scope of the appended claims.

Accordingly, the preceding merely illustrates the principles of the invention. It will be appreciated that those skilled in the art will be able to devise various arrangements which, although not explicitly described or shown herein, embody the principles of the invention and are included within its spirit and scope. Furthermore, all examples and conditional language recited herein are principally intended to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. Moreover, nothing disclosed herein is intended to be dedicated to the public regardless of whether such disclosure is explicitly recited in the claims.

The scope of the present invention, therefore, is not intended to be limited to the exemplary embodiments shown and described herein. Rather, the scope of the present invention is embodied by the appended claims.

## Claims

1. A method for determining image filters for classifying particles of a sample in a particle analyzer, the method comprising:
inputting into a machine learning algorithm one or more training data sets comprising a plurality of images of particles and quantified parameters of a plurality of image filters;
generating a dynamic particle classification algorithm based on the training data sets and the quantified parameters of the image filters; and
calculating an adjustment to one or more of the quantified parameters of the image filters.

2. The method according to claim 1, wherein each training data set comprises a plurality of unfiltered images of particles.

3. The method according to any one of claims 1-2, wherein each training data set comprises a plurality of ground-truth images of particles.

4. The method according to any one of claims 1-3, wherein the machine learning algorithm comprises a neural network.

5. The method according to any one of claims 1-4, wherein the image filters are quantified in a plurality of photodetector channels.

6. The method according to any one of claims 1-5, wherein for each photodetector channel an enabled image filter is quantified as a 1 and a not-enabled image filter is quantified as a 0.

7. The method according to any one of claims 1-6, wherein the plurality of image filters comprise one or more image filter parameters selected from: smooth, sharpen, blur, threshold, gamma correction, edges, invert and intensity.

8. The method according to any one of claims 1-7, wherein the quantified parameters of the image filters are inputted into the machine learning algorithm in a predetermined order.

9. The method according to any one of claims 1-8, wherein calculating an adjustment to one or more of the quantified parameters of the image filters comprises determining accuracy and loss statistics of the generated dynamic particle classification algorithm.

10. The method according to claim 9, wherein the accuracy and loss statistics of the dynamic particle classification algorithm is calculated by an iterative optimization approach, and/or
wherein the accuracy and loss statistics of the dynamic particle classification algorithm is calculated by a gradient descent algorithm.

11. The method according to claim 9, wherein the accuracy and loss statistics of the dynamic particle classification algorithm is calculated by backpropagation.

12. The method according to any one of claims 9-11, wherein the method further comprises adjusting one or more of the image filters based on the calculated accuracy and loss statistics.

13. The method according to any one of claims 9-12, wherein the method comprises irradiating the particles of the sample with a light source and detecting light from the particles with a light detection system.

14. The method according to claim 10, wherein the method comprises generating an image of each particle based on the detected light.

15. A system comprising:
a light source configured to irradiate a sample in a flow stream;
a light detection system comprising a plurality of photodetectors; and
a processor comprising memory operably coupled to the processor
wherein the memory comprises instructions stored thereon, which when executed by the processor, cause the processor to:
input into a machine learning algorithm one or more training data sets comprising a plurality of images of particles and quantified parameters of a plurality of image filters;
generate a dynamic particle classification algorithm based on the training data sets and the quantified parameters of the image filters; and
calculate an adjustment to one or more of the quantified parameters of the image filters.
